(19)

Europäisches
Patentamt
European
Patent Office
Office européen
des brevets

(11) **EP 2 168 662 A1**

(12) **EUROPEAN PATENT APPLICATION**

(43) Date of publication:
**31.03.2010 Bulletin 2010/13**

(21) Application number: **09252119.4**

(22) Date of filing: **02.09.2009**

(51) Int Cl.:
*B01D 53/94* (2006.01)  *B01J 23/10* (2006.01)
*B01J 23/34* (2006.01)  *B01J 23/63* (2006.01)
*B01J 35/00* (2006.01)  *B01J 35/04* (2006.01)
*F01N 3/022* (2006.01)  *F01N 3/28* (2006.01)
*B01D 46/24* (2006.01)  *B01D 46/00* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **03.09.2008 JP 2008226075
24.08.2009 JP 2009193239**

(71) Applicant: **NGK INSULATORS, LTD.
Nagoya-city, Aichi 467-8530 (JP)**

(72) Inventor: **Mizutani, Takashi
Nagoya City, Aichi-ken 467-8530 (JP)**

(74) Representative: **Paget, Hugh Charles Edward et al
Mewburn Ellis LLP
33 Gutter Lane
London
EC2V 8AS (GB)**

(54) **Catalyst loaded honeycomb filter for the purification of exhaust gas**

(57)     A catalyst loaded filter was provided with a honeycomb structure base where a plurality of cells forming exhaust gas through channels partitioned by partition walls made of porous ceramic having multiple pores are formed, wherein plugged sections, which are plugged, are formed alternately at opening end portions of one side and opening end portions of the other side of the plurality of cells, and PM trapping layers having an average pore diameter smaller than an average pore diameter in the partition walls are formed on the partition walls, the PM trapping layers having catalyst layers which are loaded with catalyst, and further catalyst group is distributed on most outer profile of the PM trapping layer.

**EP 2 168 662 A1**

**Description**

[FIELD OF THE INVENTION]

The present invention relates to a catalyst loaded filter which is used for trapping or purifying particulates contained in exhaust gas discharged from internal combustion engines such as diesel engines or various combustion apparatuses.

[BACKGROUND ART]

Exhaust gas discharged from internal combustion engines such as diesel engines or various combustion apparatuses (hereinafter appropriately referred to as "internal combustion engines and the like") contain a large amount of particulate matter mainly composed of soot (graphite) (hereinafter appropriately referred to as "particulate matter", "particulate", or "PM"). Since the particulate emitted directly in the air causes the environmental pollution, it is widely adopted to install a filter in an exhaust gas through channel from an internal combustion engine and the like to trap particulates.

Filter used for such purpose include, for example, a honeycomb filter, which is composed of a honeycomb structural body having a plurality of cells forming gas through channels partitioned by partition walls made of porous ceramic with multiple pores, opening end portions of one side and opening end portions of the other side of a plurality of cells being plugged alternately by the plugged sections. Further, in recent years, a honeycomb filter provided with an oxidation catalyst for promoting oxidation (combustion) of particulate (hereinafter appropriately referred to as "catalyst loaded filter") has been used.

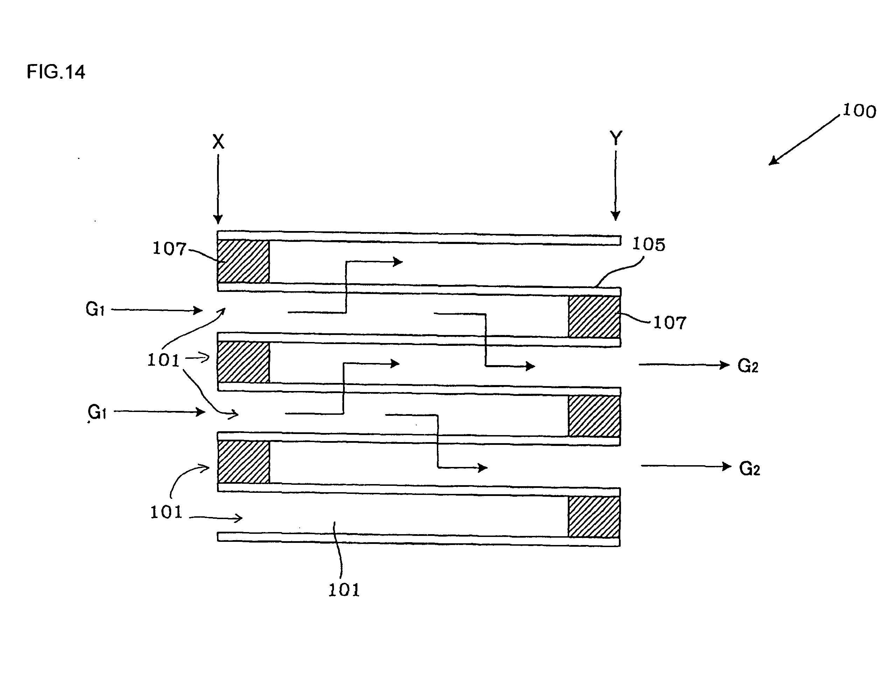

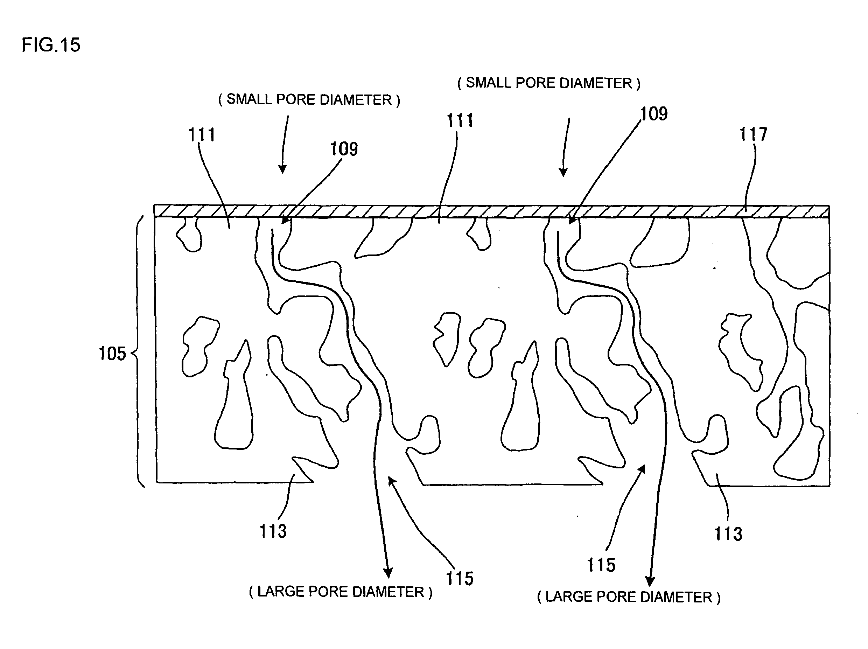

A honeycomb filter 100 shown in Figs. 14, 15, for example, has a plurality of cells 101 forming gas through channels partitioned by partition walls 105 made of porous ceramic with multiple pores, and opening end portions of one side X and opening end portion of the other side Y of a plurality of cells 101 are plugged alternately by plugged sections 107. Further, open frontal area 109 of the pores formed at the inlet side 111 (The exhaust gas inflow side is hereinbelow referred to as the "inlet side".) of the partition wall 105 is coated with catalyst 117, and gas G1 is arranged to flow in from the open frontal area 109 of pores to flow out to the adjacent cell through channel via open frontal area 115 of pores formed on the outlet side 113 (The exhaust gas outflow side is hereinbelow referred to as the "outflow side".) of the partition walls.

As described above, in conventional filters, particulates in the exhaust gas are trapped by the partition walls when the exhaust gas passes through the partition walls if the exhaust gas is arranged to flow in from exhaust gas inlet cell, and purified gas from which particulates have been removed is arranged to flow out from outlet cell. In addition, oxidation catalyst loaded on the partition wall surfaces and on the internal surfaces of the pores in the partition wall of honeycomb filter can promote oxidation (combustion) of particulates so that particulates in the exhaust gas can be reduced, which contributes to effective purification of the exhaust gas.

In such a catalyst loaded filter as composed of porous ceramic, which has trapping layers of average pore diameter that allows particulates contained in such the exhaust gas to be reliably trapped, at the inlet side of the partition wall, a layer with pore diameter at the inlet side smaller than that at the outlet side of the partition wall is formed and the layer with small pore diameter is further coated with the catalyst. However, when such a catalyst layer loaded (coated) with the catalyst is formed on the layer as a trapping layer having reduced pore diameters, there has been a problem that most soot has difficulty to penetrate into the catalyst layer due to a fact that the pore diameters become further smaller after the catalyst is loaded. In other words, since the average diameter of soot which flies from engines is larger than the average pore diameter of the catalyst layer formed in an entrance layer, except minute particle of soot, soot hardly penetrates through inside of the pore diameter, resulting in insufficient contact between the soot and the catalyst even when the catalyst layer is formed, and thus regeneration efficiency of soot has not reached to sufficient level.

Particularly, in a case where catalyst which can burn soot at low temperature is coated, contact between soot and catalyst is extremely important. When soot can not contact catalyst, effectiveness of the catalyst can not be sufficiently exerted, which has been a problem.

In conventional DPF, as described above, in a case where the entrance layer has small average pore diameter and in addition, it is composed of catalyst layer in which catalyst is coated in a layer state in the entrance layer of the partition wall, high speed soot combustion has been difficult to obtain, while suppressing pressure loss increase before soot is deposited. That is, in a case where the entrance layer is composed of a catalyst layer just like the conventional DPF, the catalyst itself has high penetration resistance, or low in permeability, and thereby there is a risk that the pressure loss becomes high in a state where soot has not been deposited. In other words, after the engine has continuously run sufficiently, almost no soot can penetrate into pores because the catalyst layer has small average pore diameter, and therefore the majority of soot is deposited on the entrance layer just like in a cake-layer state. However, in an initial engine running stage, since the entrance layer does not have soot deposited in cake-layer state yet, so-called buffer performance against the stress generated by flow speed of soot or exhaust gas flying from the engine can not be expected, and thus the penetration resistance into the catalyst layer becomes high and there may be a risk of pressure loss increase.

Above all, since the conventional DPF is composed of a catalyst layer coated with catalyst in the whole entrance partition wall, even though multiple pores are provided in the honeycomb base, all pores are covered by the catalyst, and thus porosity characteristics is hard to be exerted, despite that pores are provided for porosity purpose. In other words, although catalyst itself is high in penetration resistance or low in permeability, catalyst is loaded in the total surface of entrance layer as a catalyst layer, which has caused easy occurrence of pressure loss.

In addition, in the conventional DPF, there has been a problem of peeling occurrence from the partition wall, which may easily deteriorate catalyst function. In general, there is at least a difference in heat expansion coefficient between the partition wall and catalyst. In the conventional DPF, catalyst which is loaded on the partition wall is composed to be layer state, and thereby all the pores which are formed in the entrance layer of the partition wall are closed. Accordingly, regeneration at this closed state will generate a significant difference of heat expansion coefficient between the partition wall and catalyst. As a result, repetitive regeneration causes damage in loading condition of the catalyst, which tends to cause peeling from the partition wall, creating a problem of prohibiting repetitive usage.

For these conventional problems, there are following patent documents 1 to 3.

In the patent document 1, the purpose thereof is set "to filter particulates which are emerged through catalytic reaction of fluid and fluid constituents when the fluid passes through a filter", and such a catalyst filtering device is disclosed that a layer (membrane) is formed at the inlet side of the partition wall so that pore diameters are smaller than the partition wall and further catalyst is coated thereon. However, "a layer with small pore diameters" according to the document 1 allows soot to hardly penetrate into the aforementioned "layer with small pore diameters" because pore diameters are small. Consequently, contact between soot and catalyst cannot be obtained sufficiently, and as a result enough soot regeneration efficiency cannot be obtained either. Especially, in the patent document 2, in a case where catalyst that burns soot at low temperature is coated, it is necessary to have sufficient contact between soot and catalyst. The catalyst loaded filtering device in the document 1, however, gives little contact opportunity and thereby catalyst function does not work sufficiently, and thus regeneration efficiency is extremely deteriorated.

In the patent document 3, the purpose thereof is set "to trap PM efficiently as well as to suppress pressure loss increase, and further enabling to purify through quick combustion PM that has been trapped even in the circumference portion", and such an exhaust gas purification filter is disclosed that is composed of the first layer which includes oxidation catalyst, the second layer which traps particulates and the third layer which traps particulates. However, in the exhaust gas purification filter in the document 3, the first layer which includes catalyst that is composed of large pores allowing particulates to pass through (average pore diameter: 50 $\mu$m), does not have enough membrane strength and bonding strength to the second layer, consequently peeling phenomena of the layer is deemed to happen after endurance. In addition, since particulates pass through to the second layer and they are deposited there, the first layer catalyst does not give contribution to particulates, and thereby sufficient regeneration efficiency cannot be obtained. As described above, when catalyst with high combustion performance of soot is coated, the effect thereof cannot be sufficiently exerted, in particular.

As described so far, even any one of the patent documents 1 to 3 does not give any satisfactory countermeasure yet to obtain solution, and hence further improvement is demanded.

[PRIOR ART DOCUMENT]

[PATENT DOCUMENT]

[Patent document 1] JP 07-505083 W
[Patent document 2] JP 2007-209913 A
[Patent document 3] JP 2006-77672 A

[SUMMARY OF THE INVENTION]

The present invention has been made in view of the above problems of the prior art, and the object is to provide a catalyst loaded filter which can obtain a high combustion speed of soot and in addition can improve regeneration efficiency, while obtaining suppression effect of pressure loss increase before and after soot deposition through forming an entrance layer of the partition wall as a layer having small average pore diameter than the other layer of the partition wall, and also through deposition of catalyst group on most outer profile of the entrance layer. Especially, exposure of catalyst group from pores can increase the contact opportunity between soot and catalyst as well as maintaining endurance.

The present invention provides the following catalyst loaded filter.

[1] A catalyst loaded filter provided with a honeycomb structure base where a plurality of cells forming exhaust gas through channels partitioned by partition walls made of porous ceramic having multiple pores are formed, wherein plugged sections, which are plugged, are formed alternately at opening end portions of one side and opening end portions of the other side of said plurality of cells, PM trapping layers having an average pore diameter smaller than an average pore diameter in the partition walls are formed on said partition walls, said PM trapping layers having catalyst layers which are loaded with catalyst, and further catalyst group is distributed on most outer profile of said PM trapping layer.

[2] The catalyst loaded filter according to [1], wherein three-dimensional contact ratio of said catalyst group which is distributed on said most outer profile is 20% or more, and 80% or less.

[3] The catalyst loaded filter according to [1] or [2], wherein a ratio of contact length of said catalyst group to the most outer profile line formed in lengthwise direction of predetermined area on said most outer profile is 20% or more, and 80% or less.

[4] The catalyst loaded filter according to any one of [1] to [3], wherein thickness of said catalyst group is 30 μm or less from said most outer profile line.

[5] The catalyst loaded filter according to any one of [1] to [4], wherein a length of said catalyst group in contact with said most outer profile line is 1 times or more and 20 times or less of average pore diameter of particles forming said PM trapping layer.

[6] The catalyst loaded filter according to any one of [1] to [5], wherein a catalyst of said catalyst group and said catalyst layer are a PM removing catalyst.

[7] The catalyst loaded filter according to [6], wherein said PM removing catalyst is composed of particles of the PM removing catalyst.

[8] The catalyst loaded filter according to any one of [1] to [7], wherein a gas catalyst layer is structured in an exit layer of said partition wall from which exhaust gas flows out, said gas catalyst layer being loaded or coated with a gas purification catalyst to promote oxidation of unburnt gas.

[BRIEF DESCRIPTION OF THE DRAWINGS]

[Fig. 1] Fig. 1 is a schematic drawing of a ceramic filter, showing a perspective view of the catalyst loaded filter of one embodiment of the present invention.

[Fig. 2] Fig. 2 is a schematic drawing of a catalyst loaded filter of Fig.1 showing a plan view of the catalyst filter.

[Fig. 3] Fig. 3 is a sectional view of the catalyst loaded filter of Fig. 1 showing schematically.

[Fig. 4] Fig. 4 is a schematic diagram showing a part of partition wall of a catalyst loaded filter according to the embodiment, showing a partly sectional perspective view thereof.

[Fig. 5] Fig. 5 is a schematic diagram showing a part of partition wall of the catalyst loaded filter according to the embodiment, and showing a partly sectional view.

[Fig. 6] Fig. 6 is a schematic diagram showing a part of the partition wall of the catalyst loaded filter according to the embodiment, and showing a partial enlarged sectional view.

[Fig. 7] Fig. 7 is a schematic diagram showing a part of the partition wall of the catalyst loaded filter according to the embodiment, which is before loading catalyst, and showing a partial enlarged sectional view.

[Fig. 8] Fig. 8 is a schematic view of a ceramic filter to which another embodiment of the present invention is applied, and is a schematic diagram showing a part of the partition wall of the catalyst loaded filter before loading catalyst, showing a partial enlarged sectional view.

[Fig. 9] Fig. 9 is a schematic view of a ceramic filter to which another embodiment of the present invention is applied, and is a schematic diagram showing a part of the partition wall of the catalyst loaded filter before loading catalyst, showing a partial enlarged sectional view.

[Fig. 10] Fig. 10 is a schematic view of a ceramic filter to which another embodiment of the present invention is applied, and is a schematic diagram showing a part of the partition wall of the catalyst loaded filter before loading catalyst, showing a partial enlarged sectional view.

[Fig. 11] Fig. 11 is a schematic view of a ceramic filter to which another embodiment of the present invention is applied, showing a perspective view of the ceramic filter.

[Fig. 12] Fig. 12 is a schematic diagram illustrating a test piece for permeability measurement.

[Fig. 13] Fig. 13 is schematic diagram of a ceramic filter to which one embodiment of the present invention is applied, showing partial enlarged view of a PM trapping layer of the ceramic filter.

[Fig. 14] Fig. 14 is a schematic diagram showing a conventional ceramic filter, showing a sectional view of the ceramic filter.

[Fig. 15] Fig. 15 is a partial enlarged view of Fig. 14, showing the section thereof schematically.

[DESCRIPTION OF REFERENCE NUMERALS]

1: catalyst filter, 1A: catalyst loaded filter, 3: cell, 4: partition wall, 4a: inlet side partition wall, 4b: outlet side partition wall, 5: pore, 7: entrance layer, 9: exit layer, 11: opening end portion, 11a: one side of end opening end portion of one side, 11b: opening end portion of the other side, 13: plugged section, 15: catalyst group, 17: most outer profile, 17a: most outer profile line, 20: PM trapping layer, 22: PM removing catalyst layer, 24: gas purification catalyst layer, 62: honeycomb segment, 63: honeycomb segment joint body, 64: binder, 66: outer circumference coating layer, 95: test piece, 97: rib remain, 99: ceramic particle, 99a: (most outer) ceramic particle, 99b: ceramic particle, 100: (conventional) honeycomb filter, 101: cell, 105: partition wall, 107: plugged section, 109: open frontal area, 111: entrance side, 113: exit side, 115: open frontal area, 117: catalyst, A: end face of gas inlet side, B: end face of exhaust gas outlet side, G: exhaust gas, G1: (before process) exhaust gas, G2: (after process) exhaust gas, H: surface layer reference line, I: parallel line, J: projection line (with reference to surface layer reference line), P: departing point (projection line which departs from a ceramic particle located most outside of partition wall), S1: reference line, T1: reference parallel line, U1: reference vertical line, X: opening end portion of one side, Y: opening end portion of the other side.

[EFFECT OF THE INVENTION]

According to the present invention, a PM trapping layer having small pore diameters and catalyst layer are formed, and in addition, catalyst group is distributed on the most outer profile of the PM trapping layer and whereby high combustion speed of soot can be obtained while obtaining suppression effect of pressure loss increase before and after soot deposition, and still further such an excellent effect is exerted that the honeycomb filter which improves regeneration efficiency can be provided. Especially, while contact opportunity between soot and catalyst is increased by exposing catalyst group out of the pores of the PM trapping layer, endurance can be maintained. Above all, the PM trapping layer as an entrance layer is coated or loaded with catalyst for removing PM contained in the exhaust gas and contact level between particulates and oxidation catalyst is improved so that PM can be removed reliably, and thus regeneration efficiency can be improved.

Such catalyst loaded filter can be provided that, in a case where the catalyst which is loaded or coated in the gas purification catalyst layer as an exit layer is oxidation catalyst, the total catalyst coating quantity can be reduced for maintaining an equivalent purification performance after endurance test, and the gas purification catalyst layer can be prevented from deterioration as "Ash" is caught in the PM trapping layer.

Furthermore, in a case where the catalyst loaded or coated in the gas purification catalyst layer as an exit layer is $NO_X$ catalyst, regeneration of PM deposited in the trapping layer can drop local density of $O_2$, consequently purification efficiency of $NO_X$ in the large pore layer at the exit is raised, and "Ash" or "Sulfur component" do not reach to $NO_X$ catalyst, which can suppress deterioration of $NO_X$ catalyst.

[MODE FOR CARRYING OUT THE INVENTION]

Hereinafter, embodiments to implement the catalyst loaded filter according to the present invention will be described specifically. It should be noted that the present invention includes widely catalyst loaded filters which are provided with specified items related to the invention, not to limit the following embodiments.

[1] Catalyst loaded filter of the present invention:

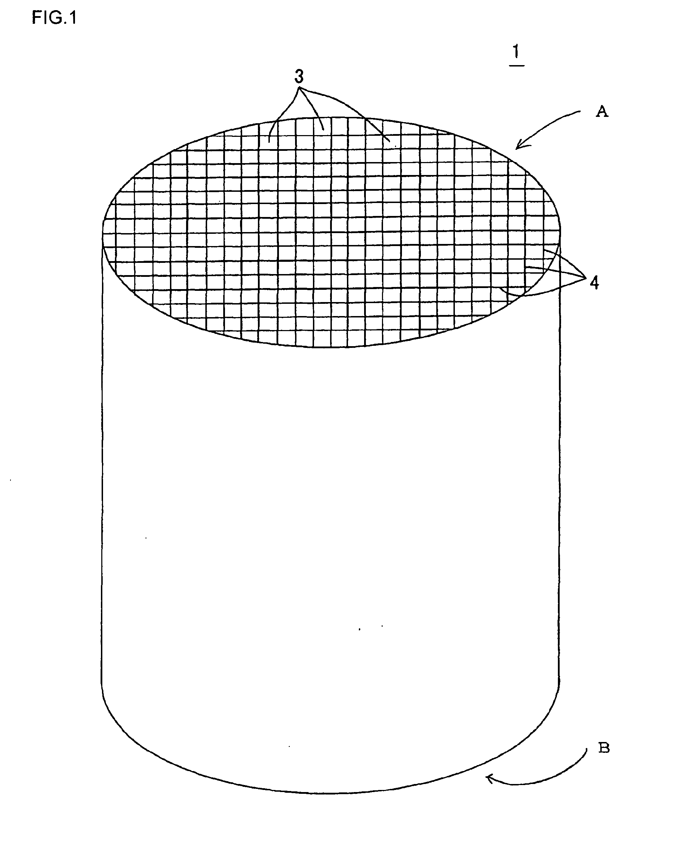

A catalyst loaded filter 1 of the present invention, as shown in Figs. 1 to 6, is a catalyst loaded filter provided with a honeycomb structure base where a plurality of cells 3 forming exhaust gas G1, G2 through channels partitioned by partition walls 4 made of porous ceramic having multiple pores 5 are formed, wherein plugged sections 13 are formed alternately at opening end portions of one side 11a and opening end portions of the other side 11b of the plurality of cells 3, PM trapping layers 20 having an average pore diameter smaller than an average pore diameter in the partition walls are formed on the partition wall 4, and the PM trapping layer 20 having catalyst layers which are loaded with catalyst, further on the most outer profile of the PM trapping layers 20, a catalyst group 15 is distributed.

[1-1] PM trapping layer:

In the catalyst loaded filter of the present embodiment, a PM trapping layer having small average pore diameter is formed as an entrance layer on the partition wall which is made of porous ceramic provided with multiple pores. That is, through forming a layer having small average pore diameter as a PM trapping layer on the partition wall, the PM trapping layer traps particulate matter (PM) mainly composed of soot (graphite) of exhaust gas, and plays a role of preventing soot from passing through to inside of pores. In other words, the reason why the PM trapping layer is arranged to prevent soot from passing through to inside pores is to obtain high soot combustion speed while suppressing pressure loss increase, when soot passes through to inside pores in the partition walls, soot is deposited in the pores and pressure loss with soot deposition is increased.

In this way, PM tapping layer having small average pore diameter is formed on the partition wall, due to which almost no soot penetrates into pores but the majority of soot is deposited on the PM rapping layer (entrance layer) in a cake layers state. The deposited soot and catalyst group, which is described later, contact each other directly, enabling to enhance regeneration efficiency.

In addition, catalyst itself has high penetration resistance, that is, low permeability, consequently when the catalyst layer is formed in the upper layer (inlet side layer of the exhaust gas) of the partition wall, not to form on the partition wall as PM trapping layer, soot or "Ash" can easily penetrate into the partition wall. That is, the partition layer can not prevent penetration of soot or "Ash" because the average pore diameter of the partition wall layer is larger than that of PM trapping layer. Especially, when soot is not deposited enough on the partition wall, open frontal area of the pore does not have soot covering, which causes easy penetration of soot or "Ash", resulting in extremely high potential risk of pressure loss occurrence. However, as specified in the present invention, when PM trapping layer is formed on the partition wall, arranging the PM trapping layer to be catalyst layer, as described later, and further distributing (dispersing) catalyst group on the PM trapping layer, penetration of soot and "Ash" into pores can be prevented to decrease pressure loss.

In addition to that, when forming catalyst group on the most outer profile of the PM trapping layer in distribution manner, even repeated regeneration is carried out, catalyst including catalyst group can be prevented from peeling off PM trapping layer, as the influence by the difference of heat expansion coefficient between PM trapping layer and catalyst can be decreased, which causes catalyst function to be exerted sufficiently. That is, when catalyst is formed in the surface layer inside the partition wall of the exhaust gas inlet side as in the conventional cases, the difference of the heat expansion coefficient between the partition wall and catalyst is generated remarkably in the process of repetitive regeneration. As a result, catalyst is peeled off the surface layer inside the partition wall, and thereby catalyst function is deteriorated, thus the repetitive regeneration has been hard to carry out. However, when the catalyst group is distributed on the most outer profile of the PM trapping layer as in the present embodiment, peeling of catalyst can be inhibited. Consequently, improvement of durability and regeneration efficiency can be achieved.

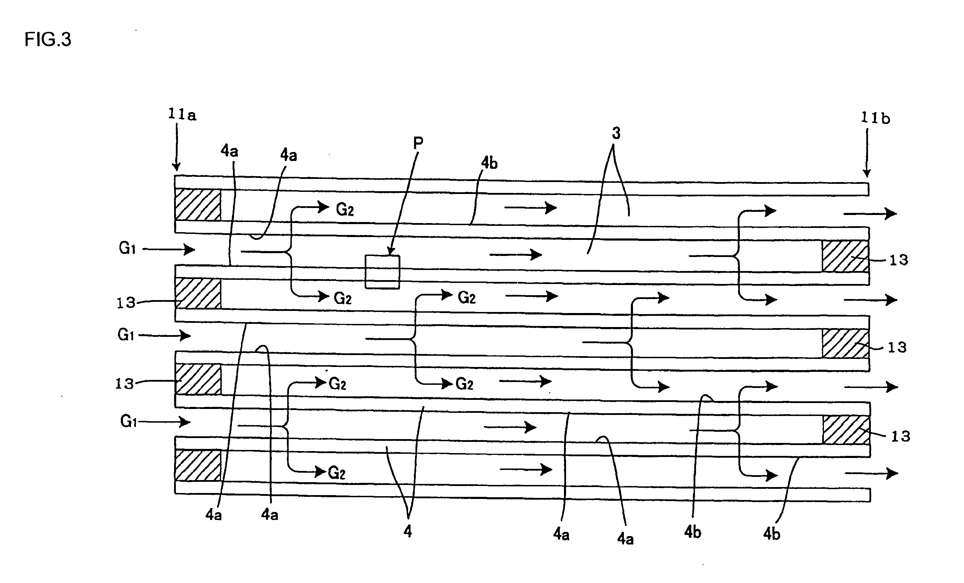

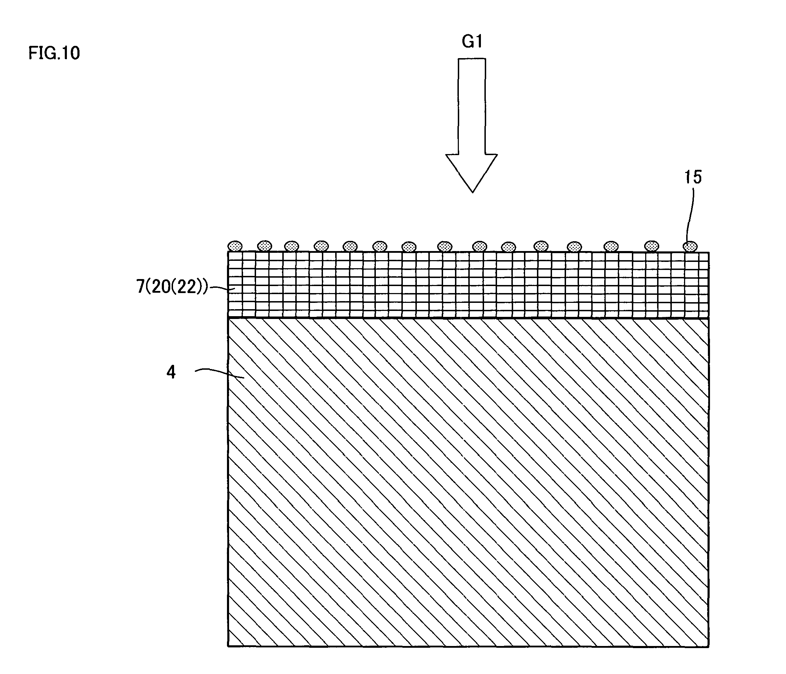

Specifically, as shown in Fig. 3, PM trapping layer (refer to numeral 20 in Fig. 10) is formed at the entrance of the gas inlet passage in the partition wall 4 which is possessed by the cell 3, and in the vicinity thereof. It should be noted that this area is arranged so that catalyst is loaded (coated) to play a role of catalyst layer 22, which is described later. As shown in Fig. 3, gas purification catalyst layer (refer to numeral 24 in Fig. 10) is formed at the outlet passage (exit) of gas in the partition wall 4 which is possessed by the cell 3 and in the vicinity thereof. This area of gas purification catalyst layer excludes at least "the area formed as PM trapping layer".

Here, forming of PM trapping layer on the "partition wall" means forming on the partition wall formed at the gas inlet side. That is, it means that an area is formed as PM trapping layer which is formed to have small average pore diameter so that soot is prevented from penetration. Specifically, as shown in Figs. 3, 4 and 6, PM trapping layer is formed as an entrance of gas inlet passage on the partition wall 4 which is possessed by the cell 3. Note that "exit layer which is to be gas outlet side" is an area formed in the partition wall of gas outlet side of the cell provided in the honeycomb base and the vicinity thereof. Specifically, as shown in Figs. 3, 4 and 6, gas outlet passage (exit) in the partition wall which is possessed by the cell and the vicinity thereof are meant.

Note that, in the present embodiment, not only double layer structure where there is a PM trapping layer as an entrance of gas inlet passage and a partition wall of a base, but also such a triple or more layer structure, provided with an intermediate layer with different average pore diameter, for example, between the PM trapping layer and the partition wall may be accepted.

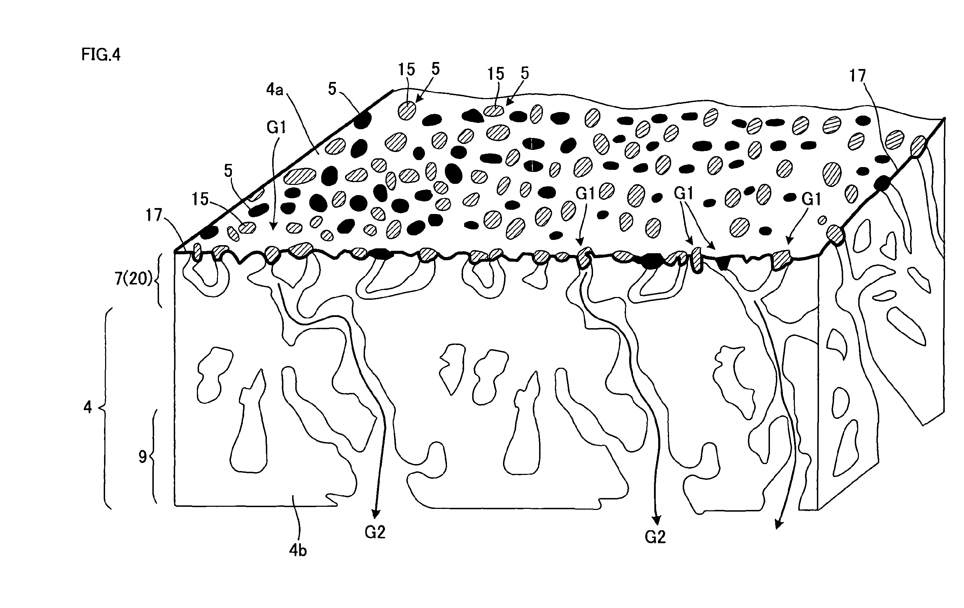

Description will be given referring to Figs. 3 and 4. As shown in Fig. 3, PM trapping layer which prevents soot penetration is formed in the gas inlet side partition wall 4a, the average pore diameter of the PM trapping layer being smaller than the gas outlet side partition wall 4b and the partition wall in the vicinity thereof, as shown in Fig. 4. Note that Fig. 3 is a schematic view showing the longitudinal section of the catalyst loaded filter according to the present embodiment, and Fig. 4 shows a part of the partition wall of catalyst loaded filter according to the present embodiment schematically and is a cross-sectional view obtained by cutting a part of the partition walls and perspective view.

"Permeability" used in the present specification stands for the physical property value calculated by the formula (1), which is an index presenting passing through resistance when predetermined gas passes through the substance (partition wall). Herein, C : permeability $(m^2)$, F : gas flow rate $(cm^3/s)$, T: thickness of test piece (cm), V : gas viscosity (dynes·sec /$cm^2$), D : diameter of test piece (cm), P : gas pressure (PSI), are indicated respectively. As for figures in the formula (1), 13.839 (PSI) = 1 (atm), and 68947.6 (dynes·sec /$cm^2$) = 1 (PSI).

[Formula 1]

$$C = \frac{8FTV}{\pi D^2 (P^2 - 13.839^2)/13.839 \times 68947.6} \times 10^{-4} \cdots (1)$$

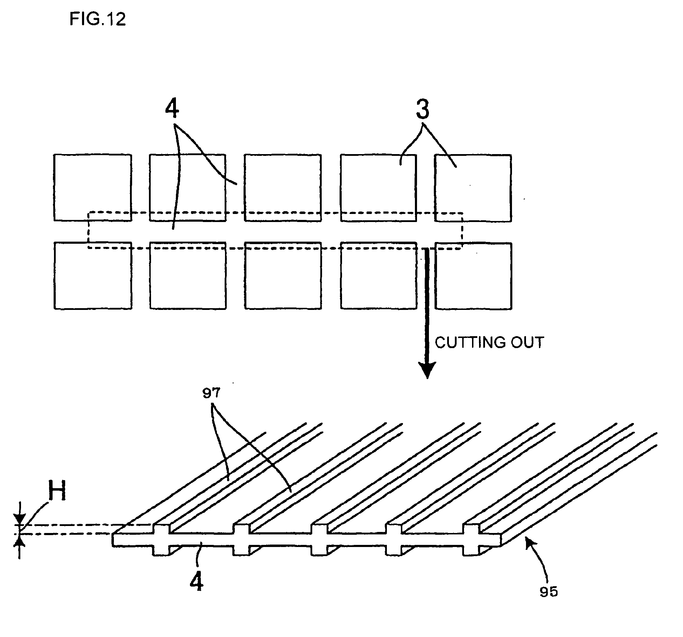

As for the permeability measurement procedure, as shown in Fig. 12, room temperature air is made to pass through the partition wall 4 of a test piece 95. The test piece 95 is a square-shaped or round-shaped plate cut out so that the rib remain height H is 0.2 mm or less. Passing through resistance is measured to obtain the permeability by the formula (1). At that time, it is preferable to use fluid seal such as grease so that air leakage is prevented through the gap with seal due to rib- remain 97. As for range of air flow rate, measurement result is used in the range where the calculated passing velocity through the partition wall between 0.1 cm/sec and 1 cm/sec inclusive.

Wording "average pore diameter" and "porosity" in this specification mean the average pore diameter and the porosity measured by mercury penetration method. However, as described later, it is performed by suitably adding measurement and evaluation by subjecting the image shot by an SEM (scanning electron microscope) to a binarization treatment.

[1-2-1] catalyst layer:

Catalyst layer is composed of PM trapping layer added by a layer formed through loading (coating) catalyst such as oxidation catalyst, and the like. That is, PM trapping layer as an entrance layer performs not only a role (function) of PM trapping but also the function of catalyst.

In other words, the catalyst layer is allowed to have both a function of PM trapping layer for trapping PM and a function of catalyst enabling purifying operation such as function of oxidation treatment of PM to the PM trapping layer as an entrance layer, that is, the area formed on the partition wall additionally, and the functions are combined with each other to enhance regeneration efficiency as the catalyst loaded filter. As a result, regeneration efficiency as a catalyst loaded filter can be enhanced tremendously, synergistically combined with catalyst group, which will be described later.

Specifically, the catalyst layer is realized through the process of loading catalyst in pores of PM trapping layer formed on the partition wall. Further, catalyst group is loaded through distributing the catalyst group on the most outer profile of the catalyst layer (PM trapping layer). In this way, when the catalyst group and catalyst layer are formed in so-called vertical structure, soot which has not contacted the catalyst group in the upper part of pores (entrance side of the exhaust gas) can be reliably contacted with the catalyst layer loaded in the lower part of the catalyst group (inside of pores and vicinity of exhaust gas entrance side), and thereby combustion performance of soot can be enhanced. That is, catalyst layer is loaded in just like a pool of flow while securing pores (through channels), and catalyst group which is loaded on pores on the partition wall is deposited (loaded) in the vicinity of opened pores among ceramic particles forming the partition wall layer, and thus the opened pores can be controlled not to be closed. Consequently, combustion of soot can be reliably enhanced while pressure loss is reduced.

[1-2-1-1] Oxidation catalyst:

In the present embodiment, the PM tapping layer is loaded (coated) with catalyst to form the catalyst layer. In this way, loading (coating) catalyst can promote oxidation of particulates and the like contained in the exhaust gas to enhance regeneration efficiency.

As an example of aforementioned catalyst, oxidation catalyst can be cited.

As oxidation catalyst, noble metal such as platinum (Pt), palladium (Pd) or rhodium (Rh) is preferably used.

In the catalyst loaded filter according to the present invention, other catalyst or purification material may be additionally loaded as a catalyst group. For example, $NO_X$ adsorber catalyst which is composed of alkali metal (Li, Na, K, Cs, etc.) or alkaline-earth metal (Ca, Ba, Sr, etc.), three way catalyst, catalytic promoter exemplified by oxide compound of cerium (Ce) and/or zirconium (Zr), HC (Hydro Carbon) adsorbent, and the like may be loaded.

For example, catalyst may include Ce and at least one kind of rare-earth metal, alkaline-earth metal, or transition metal other than Ce.

As rare-earth metal, one of the followings can be selected, for example, Sm, Gd, Nd, Y, Zr, Ca, La, Pr, and the like.

As alkaline-earth metal included in catalyst, one of the followings can be selected, for example, Mg, Ca, Sr, Ba, and the like.

As transition metal included in catalyst, one of the followings can be selected, for example, Mn, Fe, Co, Ni, Cu, Zn, Sc, Ti, V, Cr, and the like.

Loading method of catalyst component such as oxidation catalyst, $NO_X$ absorber catalyst, and the like is not limited specifically. For example, such a method can be cited as catalyst liquid containing catalyst component is subjected to wash coating to the partition walls of honeycomb structure, and then high-temperature heat treatment is performed for firing. In addition, for example, utilizing a ceramic membrane forming method such as dipping method which is conventionally known, thin membrane state catalyst layer may be formed by such method of drying and firing after sticking ceramic slurry to the entrance layer of the partition walls of honeycomb structure base. In that case, the average pore diameter of catalyst layer can be controlled by grain size and/or combination ratio of aggregate particles in the ceramic slurry and the like, porosity is by grain size of aggregate particles in the ceramic slurry and/or quantity of pore forming material and the like, thickness of coating layer is by concentration of ceramic slurry and required time duration to form membrane and the like, to obtain desired value. Note that the above-mentioned minute coating layer may be formed by two or more layers as described "at least one layer".

It should be noted that the catalyst component such as oxidation catalyst, $NO_X$ absorber catalyst, may be loaded in PM trapping layer, partition wall and the like of the honeycomb structural body, after preliminarily loading once in heat-resisting inorganic oxide having large specific surface area such as alumina, so that loading is carried out in highly distributed state.

Aforementioned catalyst group may be formed in such a method as catalyst slurry is loaded in pores of the PM trapping layer, and then dried and fired, applying, for example, suction method and the like which is conventionally known catalyst loading method.

Note that "catalyst is loaded in PM trapping layer" means catalyst is loaded in the PM trapping layer and it is not intended to mean that catalyst is loaded on the PM trapping layer in layer state. Because if catalyst is loaded on the surface of the partition wall to form catalyst layer, the surface of partition wall comes to not-exposed state while intermingling with catalyst group, and thus the present application comes to less effectual.

[1-3] Catalyst group:

Catalyst group according to the present embodiment are loaded on the most outer profile of the PM trapping layer distributing catalyst group in pores of PM trapping layer which is the entrance layer. That is, what is meant is that catalyst group is not formed on the PM trapping layer as a catalyst layer, but loaded in pores formed in the entrance layer so that catalyst is distributed as group. In other words, supposing catalyst layer is loaded on the partition wall of the entrance layer, the surface of the partition wall is covered by catalyst completely and upper part of the partition wall is closed completely by the catalyst layer, which causes the difference of heat expansion coefficient between the partition wall and catalyst as described earlier, which tends to cause catalyst peeling. However, in the present embodiment, the PM trapping layer is not covered completely by the catalyst but entrance surface is exposed partially, and therefore catalyst peeling can be prevented.

What is considered more preferable is that pores formed in the PM tripping layer which is the entrance layer are not completely closed by the catalyst group but some pores are not loaded with catalyst. As the pores are formed in this way, when pores formed in the PM tripping layer which is the entrance layer are formed not to be completely closed by the catalyst group, it becomes difficult to cause difference of heat expansion coefficient between the PM trapping layer and catalyst, enabling to prevent catalyst peeling effectively. That is, since the surface of pores (open frontal area) is exposed partially, difference of heat expansion coefficient becomes hardly occur, and thereby catalyst peeling can be prevented.

Here, "catalyst group" means a group of catalyst composed of fine particles, and it is intended to exclude catalyst which is formed as a catalyst layer composed of layer-state catalyst. What is meant is to exclude catalyst which is loaded as a so-called plane composed of layer state, and stands for a state where a gathering of particle-state catalyst is scattered (interspersed) on the partition wall layer as a group.

Specifically, as catalyst group 15 shown in Figs. 4 to 6, catalyst gathering composed of fine particles is scattered (interspersed) on the PM trapping layer as a group, and catalyst that is not formed as a catalyst layer composed of layer-state catalyst is given for the concerned case.

In addition, as shown in Figs. 4 to 6, in pores loaded with the catalyst group, the catalyst group comes into contact with soot and combustion process of soot is performed. On some pores out of total pores, the catalyst group is not loaded and hence the surface of the PM tripping layer is in partially exposed state. Therefore, catalyst is not loaded in layer state, and consequently penetration resistance can be suppressed. That is, as permeability can be retained in high level, pressure loss can be reduced and performance of the honeycomb with catalyst can be satisfactorily extracted. Moreover, since catalyst layer is formed under the catalyst group, even the catalyst group can not get touch with soot and the like and soot penetrates into pores, the PM trapping layer can trap reliably. In addition, as this PM trapping layer is also a catalyst layer loaded with catalyst, purification process can be performed reliably for soot and the like.

To "distribute" catalyst group in pores of PM trapping layer which is an entrance layer means to intersperse catalyst group in pores of entrance layer, and it does not intend to intersperse in a pore locally so as not to close the pore. As described above, the reason why catalyst group is interspersed in pores of entrance layer is to consider the potential risk of becoming a layer state as a catalyst layer, although catalyst is loaded as catalyst group, if the catalyst groups are in a state of excessive contiguity contacting each other, or the catalyst groups are in a state of excessively close contact with each other, and thus the present application comes to less effectual.

To load catalyst group on the most outer profile of the PM trapping layer means that the catalyst group is loaded in the most outside profile of the PM trapping layer. Here, "most outer profile" means the most outside profile of the PM trapping layer, which is a profile formed when connecting the departing points of particles forming the outside profile from projection line, and also in a case where pores are formed in a condition that particles are separated from each other, "most outer profile" means lines connecting in parallel to the surface layer reference line from departing point from each particle surface projection line. That is, particles which form the most outside profile of the PM trapping layer are the ones which form circumference of the PM trapping layer, and when the particles which form an area of the PM trapping layer closest to the boundary segregating through channels where fluid flows from the PM trapping layer, and the most outside profile of the PM trapping layer form pores without contiguity, such an area is meant that is obtained when the departing points of each separated particle and the project line are connected in parallel to the surface layer reference line. In other words, the PM trapping layer is a plane state when observed with naked eye, but when observed with electron microscope and the like, the profile is formed with innumerable unevenness. When such unevenness is formed, it is meant that catalyst group is loaded in dispersing manner in the area along the profile of the concave or convex, that is in the area which is obtained in pores when the departing points of the particles from the projection line are connected in parallel to the surface layer reference line. As described above, the reason why catalyst group is loaded in the profile obtained when connecting the departing points of the particles forming the outside profile from the projection line is that such arrangement can perform soot combustion effectively. In addition, the reason why catalyst group is loaded in dispersing manner in the area obtained when connecting the departing points of the particles from the projection line is that if the profile obtained when the departing points of the particles forming the outside profile from the projection line are connected is extended up to inside pores, soot penetrates easily into pores and pressure loss can hardly be reduced. Therefore, aforementioned desired position was arranged to load catalyst so that pressure loss reduction is improved while catalyst function works effectively.

"Surface layer reference line" means a line showing the average height of surface layer unevenness in one field of vision.

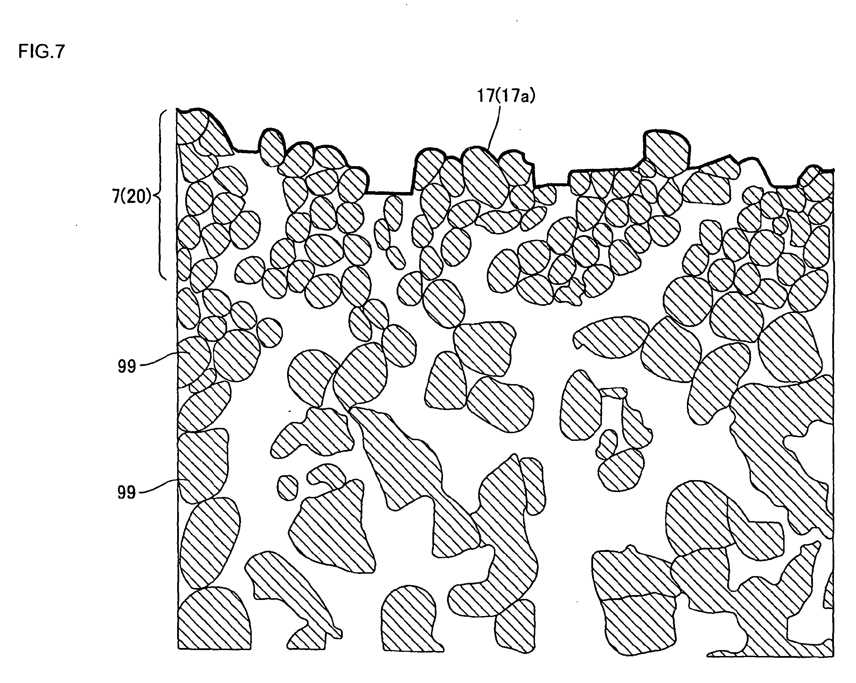

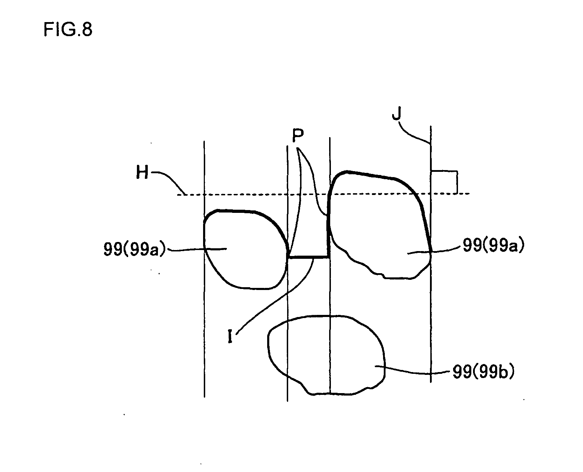

Specifically, as shown in Fig. 7, in the PM trapping layer, most outer profile 17 in unevenness state is formed and the catalyst group 15 is loaded on the most outer profile. More specifically, as shown in Fig. 8, the most outer profile means a profile that is formed when the departing points P of the particles 99a forming the most outside profile of the PM trapping layer from the projection line are connected, and further in a case where separated particles form pores, a parallel line I to the surface layer reference line H is drawn from the departing point P from the projection line of the respective particle surfaces, and a line formed when a perpendicular is drawn from the point P and joint with the aforementioned parallel line I stands for the most outer profile. Note that letter J in the Fig. 8 shows a projection line with respect to the surface layer reference line.

It should be noted that the word "most outer profile" includes not only an area as a plane which is formed with the most outside profile of the PM trapping layer, but also an area as so-called line (most outer profile line) which is formed with the most outside profile of the PM trapping layer when observed in a section of the PM trapping layer.

Average particle of catalyst is different depending on material of catalyst, for example, when catalyst is composed of aluminum or ceria grain, the catalyst is composed of the averaged particle of 2 to 6 $\mu$m and in a case of forming catalyst group through condensation of each particle, it is preferable to be composed of 5 to 40 $\mu$m particles.

What is more preferable is that the catalyst group which is distributed in pores of the entrance layer is exposed out of the most outer profile of the PM trapping layer. In a case where the catalyst group which is distributed in pores of the entrance layer is exposed out of the most outer profile of the PM trapping layer, when soot is deposited on the PM trapping layer in cake-layer state, the contact area of the catalyst group with soot can be maximum and combustion of soot can be promoted, and thus that is more preferable.

Here, "exposure" means that the catalyst group is projected out of the most outside profile of the partition wall. That is, taking the boundary segregating through channel where fluid flows and the partition walls as a reference, "exposure" means that catalyst is in a state of just like overflowing out in an area which can be a through channel where fluid flows if the catalyst group is not loaded. In other words, the partition wall is in plane-state when observed with naked eye, but when observed with an electron microscope and the like, the profile is formed with innumerable unevenness. In a case where such unevenness is formed, "exposure" means a state as if the catalyst group overflows out from the area along the profile of concave or convex.

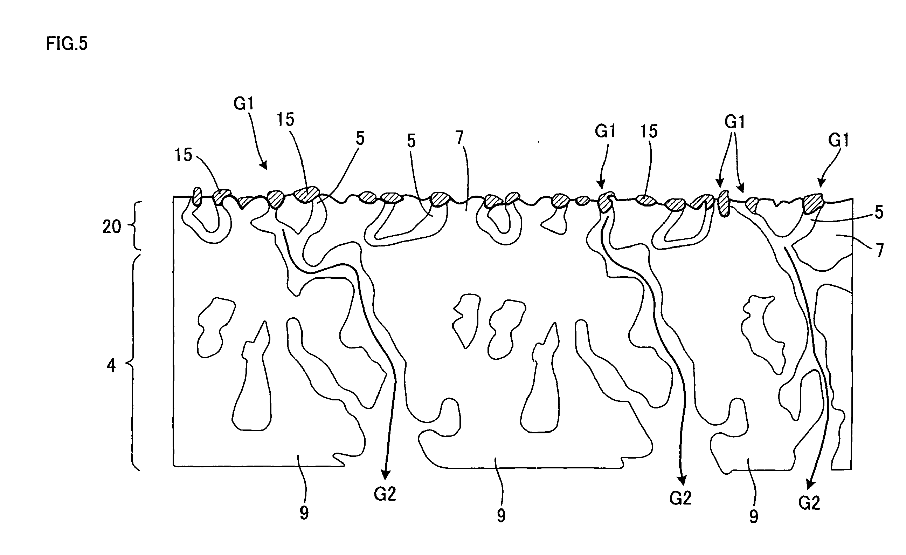

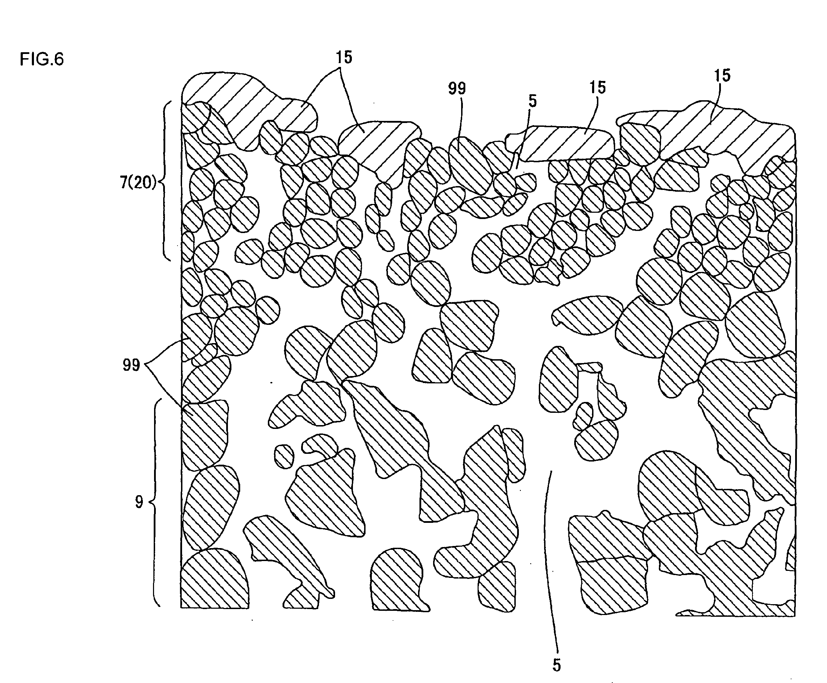

Specifically, as shown in Figs. 5 and 6, such a state can be exemplified that the catalyst group 15 does not stay only within pores 5 but overflows out of the pores.

It is preferable that three-dimensional contact ratio of the catalyst group which is distributed on the most outer profile is 20% or more, and 80% or less. This is because when the ratio of distribution on the most outer profile is below 20%, combustion efficiency of soot is deteriorated and when exceeding 80%, the risk of pressure loss is raised as well as peeling is easily generated.

Here, the word "three-dimensional contact" means not only that, in a case where the PM trapping layer is observed in a planar view, the catalyst group is arranged to get contact while being interspersed in the area as a plane formed from the most outside profile (most outer profile plane), but also that, in a case where the PM trapping layer is observed in a sectional view, the catalyst group is arranged to get contact while being interspersed in the area as a so-called line (most outer profile line). That is, the fact that the catalyst group intersperses while contacting the most outer profile plane in a three dimensional manner or the fact that the catalyst group intersperses while contacting the most outer profile line in a two dimensional manner when observed in a sectional view are also included. Moreover, "contact ratio" means a ratio of catalyst group contacting the most outer profile plane or the most outer profile line. In other words, catalyst layer is not formed such that all the catalyst group is arranged to get contact in a desired area or desired line which is the most outer profile plane or most outer profile line respectively, but the catalyst group is interspersed so that aforementioned desired ratio is obtained. In this way, contact ratio of the catalyst group to the plane of the PM trapping layer or to the line of the PM trapping layer is controlled and owing to this control, soot combustion can be promoted while controlling pressure loss of the PM trapping layer and the partition walls, and thus it is preferable.

Here, the distribution state of the catalyst group on the most outer profile is measured by the following method. Firstly, a desired area is embedded with resin to be polished and the section is observed by SEM. In SEM observation, projection is performed in the perpendicular direction to a plane representing average height of unevenness of the entrance layer in a visual field of 200 to 1,000 times and the projection plane and the edge thereof are measured. That is, polishing is repeated in each visual field observation to observe sections in the direction of depth, pseudo three dimensional values is calculated, and thus the distribution state can be observed on the most outer profile.

The contact length ratio of the catalyst group on the most outer profile to the most outer profile line formed in a length direction of the predetermined area is preferably 20% or more, and 80% or less. This is because peeling of the catalyst group from the PM trapping layer can be prevented effectively. On the other hand, when the contact length ratio to the most outer profile line is below 20%, combustion efficiency of soot becomes worth and when exceeding 80%, risk of pressure loss is raised and peeling occurs easily, therefore not preferable.

Here, "contact length ratio of the catalyst group on the most outer profile to the most outer profile line formed in a length direction of the predetermined area" is measured as follows. That is, the length of the most outer profile line in the range of observation visual field is obtained in image analysis of SEM photographs and based on that length, the length of line in which catalyst is in contact with the most outer profile line is obtained for measuring. In other words, it can be obtained by [catalyst group contact length with the most outer profile line] / [length of the most outer profile line].

The most outer profile line formed in the length direction on the "predetermined area" is the above mentioned "most outer profile line" formed in the length direction of any area which is formed on the entrance layer. Such prescription means that the "predetermined area" may include either selection of: a determined area in the partition wall formed in the axial direction (length direction) of honeycomb; a determined area in the partition wall formed in the radial direction of honeycomb; or a determined area inclined so as to intersect the axial direction (length direction) of honeycomb; or further a determined area inclined so as to intersect the radial direction of honeycomb. In other words, any direction may be selected if it is on the entrance layer.

"Contacting length ratio" is a ratio of "line length in contact with catalyst group" to the "most outer profile line". "Ratio of contact length of catalyst group occupying in the length of the most outer profile line" is a ratio of "line length in contact with catalyst group" occupied in the "most outer profile line".

What is more preferable is the fact that thickness of the catalyst group is 30 $\mu$m or less from aforementioned most outer profile line. When the thickness of the catalyst group is exceeding 30 $\mu$m, not only the temperature becomes high locally at soot combustion, but also penetration resistance becomes higher due to the thickness of catalyst. That is, permeability is reduced and catalyst peeling tends to occur in addition to increase of the risk of pressure loss.

Here, "thickness of catalyst group" means a distance (dimension) measured from the "most outer profile line" in the direction perpendicular to the line representing average height on unevenness of the entrance layer, or in the perpendicular direction to the honeycomb filter axis. Specifically, after embedding in resin and polishing an area on a surface or in a section which is located in desired area, the section thereof is observed by SEM (scanning electron microscope), perform quantitative analysis of chemical composition by EDX (energy-dispersive fluorescent X-ray analysis), and measure the accumulated value of catalyst component at each measurement point as the catalyst loaded value of the position, and thus the thickness is obtained. Note that in SME observation, projection is performed in the perpendicular direction to a plane representing average height of unevenness of the entrance layer in a visual field of 200 to 1,000 times and the projection plane and the edge thereof are measured.

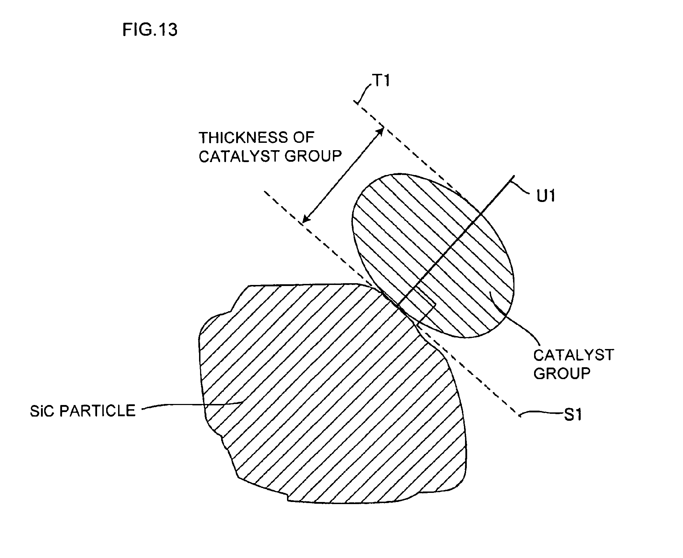

More specifically, as shown in Fig. 13, for example, in a case where SiC particles forming PM trapping layer are in contact with catalyst group, taking as a reference line S1 the tangential line of the spot where catalyst group contacts SiC particles, a reference vertical line U1, which is perpendicular to the reference line S1, is measured as a thickness of catalyst group, in which the distance between the reference line S1 and a reference parallel line T1 which is parallel to the S1 and is tangent to the catalyst group is maximum. As described above, it is preferable to measure distribution state on the most outer profile through polishing repeatedly at each visual field observation and performing sectional observation in a depth direction so as to calculate pseudo three dimensional values.

It is more preferable that the contact length of each catalyst group to the most outer profile line is 1 times or more and 20 times or less of average pore diameter of particles forming PM trapping layer. In such constitution, catalyst group can be suitably distributed, enabling to control penetration resistance. That is, permeability is enhanced to prevent pressure loss, and thus catalyst group can be prevented from peeling. On the other hand, when the contact length of each catalyst group with the most outer profile line is less than 1 times, the contact of the catalyst group with the soot remarkably decrease when Ash is deposited on the PM trapping layer, and the soot regeneration efficiency sharply falls. In addition, when the contact length of each catalyst group with the most outer profile line is exceeding 20 times of average pore diameter forming PM trapping layer, the area where catalyst is loaded on the partition wall becomes resultantly larger, and consequently penetration resistance becomes larger. Further, when the lower limit of the contact length of each catalyst group to the most outer profile line is 4 times or more and 20 times or less of average pore diameter of particles forming PM trapping layer, a sufficient soot combustion rate can preferably be obtained in a state that the catalyst group is dispersed more. When it is 10 times or more and 20 times or less, a surface exposed area is further sufficient, enabling to sufficiently maintain the soot combustion performance after duration, which is most preferable.

In addition, as catalyst which composes aforementioned catalyst group, for example, oxidation catalyst for PM combustion removal can be cited. Note that this oxidation catalyst is duplicated description in "oxidation catalyst" in [1-2-1], therefore only different contents are described. Refer to "oxidation catalyst" in [1-2-1]

Loading method of oxidation catalyst is not limited specifically, but, for example, it is recommendable that using a conventionally known ceramic membrane forming method such as dipping method for the partition walls of honeycomb structure, ceramic slurry is adhered to the entrance layer of the partition walls of honeycomb structural base, and after DPF is drawn out, air blow from entrance side is preferable. As air blow like this makes air pass through pores, pores are secured and catalyst group remains on ceramic particles except open frontal pores. Thereafter, it is preferable that catalyst group is formed by means of drying and firing method and the like. At that time, average pore diameter of PM trapping layer can be adjusted to desired value by grain size or ratio of combination of aggregate particles and the like, porosity is by grain size of aggregate particles or quantity of porosity promotion material and the like, thickness of catalyst group is by concentration of ceramic slurry or time required for membrane forming and the like.

As described so far, when PM combustion catalyst group is distributed in pores and at the same time the entrance layer is structured as PM catalyst layer through loading PM catalyst in PM trapping layer which is the entrance layer, even there is soot that penetrates into the entrance layer without contacting PM catalyst group, soot can be burnt by the PM combustion catalyst loaded in the entrance layer, consequently combustion efficiency can be enhanced, and, in addition, honeycomb damage due to pressure loss can be reduced.

It is preferable that PM removing catalyst is preferably coated with of particles of PM removing catalyst. With such an arrangement, even minute pores can be loaded. Consequently, catalyst group can play not only a role of burning soot but also a role (function) of performing oxidation process of PM as the PM catalyst group.

[1-4] Relationship among catalyst group, PM trapping layer, PM removing catalyst layer and gas purification catalyst layer:

Further preferably, the partition wall exit layer through which the exhaust gas flows out is structured as a gas purification catalyst layer where gas purification catalyst which promotes oxidation of unburnt gas is loaded or coated. In this way, the exit layer of the partition wall is structured to be a gas purification catalyst layer where gas purification catalyst which promotes oxidation of unburnt gas is loaded or coated. Owing to this, unburnt gas can be reliably burnt. That is, in cooperation of catalyst group on pores, PM trapping layer which is PM removing catalyst layer in the entrance layer, and gas purification catalyst layer in the exit layer, effects of the present application can be extensively exerted.

The reason why such structure is applied is as follows: a layer made of ceramic particles (PM trapping layer) on the partition wall has small pore diameter and high porosity, and hence pressure loss reduction effect can be obtained even by that ceramic only, however there is a limit to make pore diameter small while porosity is retained. Therefore, catalyst group is loaded in the vicinity of open frontal area of ceramic surface layer to make smaller the size of entrance pore, consequently penetration of soot into pores is prevented, enabling further reduction of pressure loss. Here, if the catalyst group closes completely the open frontal area, there is a risk of increase of pressure loss, and thereby the catalyst group is loaded in just like a sediment of flow to keep pores (through channels) open reliably, and thus intending pressure loss reduction achievement while improving regeneration efficiency.

Although catalyst is mainly deposited in the partition wall pores, especially in just like sediment of flow among ceramic particles, the more widely PM and catalyst is arranged to contact, the higher regeneration speed can be realized from PM combustion view point. With regard to this point, the conventional partition wall structure allows deposition of PM in pores to some extent, and thereby contact between PM and catalyst can be obtained. However, when PM trapping layer is formed to be a membrane so that average pore diameter is smaller than the partition wall at the entrance side of the partition wall, PM can hardly enter in pores of the PM trapping layer because pore diameters are small. Consequently, contact between PM and catalyst tends to decrease remarkably. Then if catalyst group is loaded in disperse manner on the PM trapping layer which is in the entrance side, regeneration speed of the filter as a whole can be improved as PM and catalyst contact even on the PM trapping layer. In addition, from pressure loss reduction view point, catalyst is loaded in just like "sediment part of flow" so that pores (through channels) are retained reliably, catalyst group loaded on the PM trapping layer (in pores) can be deposited in the vicinity of opened pores among ceramic particles, which does not close the opened pores. Therefore, pores of catalyst layer formed in the partition wall are not closed, and hence pressure loss can be reliably reduced. Note that, in order to load catalyst group so that the opened pores are not closed, it is preferable that contact of PM is achieved while maintaining through channels by means of air blow and the like in the process of catalyst coating.

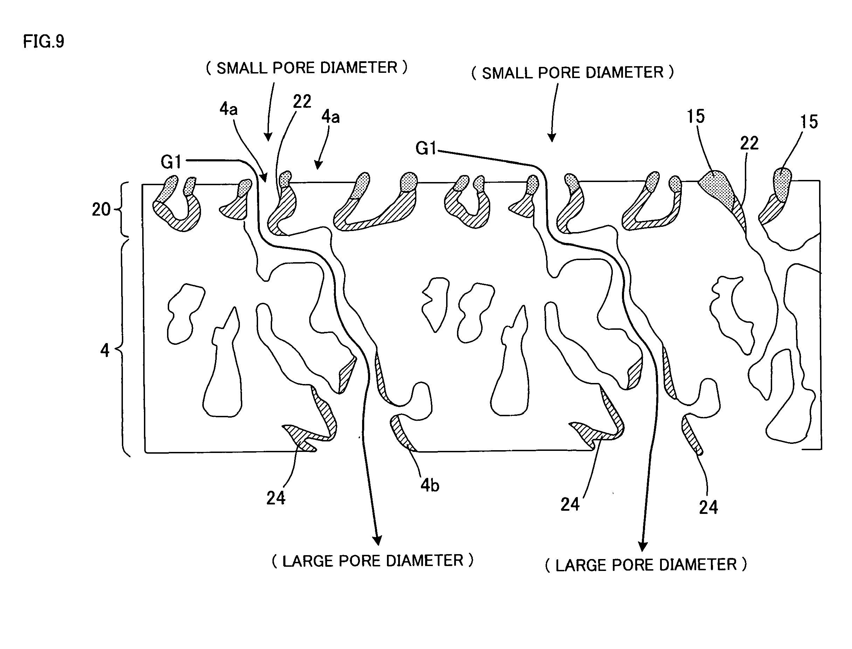

Aforementioned "sediment part of flow" stands for a part where profile variation formed in the vicinity of the gap between particles and binder becomes large, although not limited to this but the quite general sediment is also included. Specifically, what is formed in an area where PM removing catalyst is loaded as shown in Fig. 9 can be cited as an example of this "sediment".

As described so far, in a case where catalyst group is composed of the same catalyst as PM removing catalyst loaded in the PM trapping layer, this catalyst is loaded on the most outer profile line as well so that ignition point of PM combustion can be settled and regeneration efficiency can be enhanced. That is, if there is only PM removing catalyst layer (a layer coated with PM removing catalyst on ceramic layer), quantity of soot deposited in pores is small due to small pore diameters. Consequently, although catalyst loading is attempted for the purpose of PM removal, contact with soot is decreased and it is difficult to take effect of purification process. Loading the catalyst on the most outer profile line as well can prevent the above problem, or ignition point of PM combustion can be established, enabling to take effect of the present application.

[1-5-1] Gas purification catalyst and gas catalyst layer:

Gas purification catalyst layer is composed of gas purification catalyst, which is formed through loading (coating) gas purification catalyst on the partition wall of gas outlet side of cell and the vicinity thereof. Here, when the word "exhaust gas purification catalyst" is used, it means catalyst component which has effect of exhaust gas purification, and all kinds of catalyst for promoting purification by oxidation or reduction of harmful ingredients contained in the exhaust gas such as nitrogen oxide, hydrocarbon, or carbon monoxide are included.

In a case where oxidation catalyst is loaded (coated) as gas purification catalyst, the gas purification catalyst layer is formed at the exit layer of the partition wall as a layer for promoting oxidation of particulates contained in the exhaust gas. When oxidation catalyst is loaded as gas purification catalyst, the total quantity of catalyst coating (hereinafter appropriately referred to as "total catalyst coating quantity") used for maintaining equivalent purification performance after endurance can be reduced, which is preferable. Note that "Ash" is caught at the PM trapping layer, and thereby along with aforementioned reduction of total catalyst coating quantity, catalyst deterioration of gas purification catalyst layer can be prevented as well, which is preferable.

As oxidation catalyst used for this gas purification catalyst, such precious metals as platinum (Pt), palladium (Pd) and rhodium (Rh) are preferably used.

When oxidation catalyst is loaded as gas purification catalyst, other catalyst or purification material may be additionally loaded. For example, $NO_X$ absorber catalyst which is composed of alkali metal (Li, Na, K, Cs, etc.) or alkaline earth metal (Ca, Ba, Sr, etc.), three way catalyst, catalytic promoter exemplified by oxide compound of cerium (Ce) and/or zirconium (Zr), HC (Hydro Carbon) adsorbent, and the like may be loaded.

Loading method of catalyst component, such as oxidation catalyst and $NO_X$ absorber catalyst, is not limited specifically. For example, such a method can be cited as catalyst liquid containing catalyst component is subjected to wash coating to the partition walls of honeycomb structural base, and then high-temperature heat treatment is performed for firing. In addition, since loading is carried out in highly distributed state, the catalyst component such as oxidation catalyst and $NO_X$ absorber catalyst is preferably loaded in partition wall and the like of the honeycomb structural body after preliminarily loading once in heat-resisting inorganic oxide having large specific surface area such as alumina.

In a case where gas purification catalyst is $NO_X$ purification catalyst, gas purification catalyst layer is formed at the exit layer of the partition walls as a $NO_X$ purification layer. Specifically, the gas purification catalyst layer is formed such that this gas purification catalyst is loaded on partition wall of the gas outlet side of a cell which is in the exit layer of the partition wall and on the partition wall in the vicinity thereof. When the gas purification catalyst layer is formed after $NO_X$ purification catalyst as a gas purification catalyst is loaded (coated) in this way, the catalyst group distributed on pores and regeneration process (oxidation process) of PM which is deposited in the PM trapping layer of the partition wall entrance can decrease the concentration of $O_2$ locally and along with this, $NO_X$ purification efficiency can be improved by the gas purification catalyst layer formed in the exit layer of the partition wall, which is preferable. Note that since constituent of "Ash" or "Sulfur" does not flow in the gas purification catalyst layer composed of $NO_X$ catalyst, such an effect can be exerted as catalyst deterioration of $NO_X$ catalyst can be suppressed.

This $NO_X$ purification catalyst can include as coating material any metallic oxide selected from a group composed of aluminum, zirconia, titania, and combination thereof.

As $NO_X$ purification catalyst, $NO_X$ absorber reduction catalyst or $NO_X$ selective reduction catalyst can be cited.

Here, "$NO_X$ absorber reduction catalyst" stands for a catalyst such that $NO_X$ is adsorbed when air-fuel ratio is in a lean state, and when rich spike is performed at a constant interval (the exhaust gas is made fuel rich), adsorbed $NO_X$ is reduced into $N_2$. Such catalyst is obtained, for example, when at least one kind of metal selected from a group consisting of noble metal such as platinum, palladium and rhodium, alkali metal, and alkaline earth metal is loaded on coating material of metallic oxide such as aluminum, zirconia and titania.

"$NO_X$ selective reduction catalyst" stands for such catalyst that purifying $NO_X$ through selective reaction of $NO_X$ with reduction component in lean atmosphere. Such catalyst can be obtained in such a way that at least one kind of metal selected from a group consisting of, for example, copper, cobalt, nickel, iron, gallium, lanthanum, cerium, zinc, titania, calcium, barium and silver, is loaded on a coating material containing zeolite or aluminum.

Loading method of gas purification catalyst is not limited specifically. For example, such a method can be cited as catalyst liquid containing catalyst component is subjected to wash coating to the partition wall of honeycomb structural base, and then high-temperature heat treatment is performed for firing. In addition, for example, utilizing a ceramic membrane forming method such as dipping method which is conventionally known, thin membrane state gas purification catalyst layer may be formed by such method of drying and firing after sticking ceramic slurry to the exit layer of the partition wall made of honeycomb structural base. In that case, the average pore diameter of purification catalyst layer can be controlled by grain size and/or combination ratio of aggregate particles in the ceramic slurry and the like, porosity is by grain size of aggregate particles in the ceramic slurry and/or quantity of pore forming material and the like, thickness of coating layer is by concentration of ceramic slurry and required time duration to form membrane and the like, to obtain desired value.

Catalyst component of three-way catalyst, oxidation catalyst, nitrogen oxide absorber catalyst and the like are loaded in highly dispersed state. Therefore, it is preferable to preliminarily load the catalyst component once on heat-resistance inorganic oxide which has large specific surface area like aluminum, and then load it on the partition wall and the like of honeycomb structural body.

[1-5-2] Relationship between other PM removing catalyst layer and gas purification catalyst layer:

Referring to Figs. 9 and 10, situation of purification process of soot and gas will be described specifically which is in cooperative action of catalyst group, PM removing catalyst layer and gas purification catalyst layer.

As shown in Fig. 9, on gas inlet side partition wall 4a of cell 3, the catalyst group 15 is formed (loaded) in pores and further, in pore diameter of the gas inlet side partition wall 4a of cell 3, a PM trapping layer 20 is formed which has smaller average pore diameter than the gas outlet side partition wall 4b and the partition wall in the vicinity thereof as shown in Fig. 10. In addition, a PM removal catalyst layer 22 is formed in this PM trapping layer, having PM removal catalyst loaded (coated) in the desired area. In the partition wall of the gas outlet side on cell 3 and in the vicinity thereof, gas purification catalyst layer 24 is formed to which gas purification catalyst is loaded. Note that Fig. 9 is a schematic illustration showing sectional view of length direction of catalyst loaded filter of another aspect of the present embodiment. Fig. 10 is a schematic illustration showing sectional view of length direction of catalyst loaded filter of another aspect of the present embodiment. In such a structure, as shown in Fig. 9, gas G1 contacts the catalyst group 15 and further gas G1 which does not contact the catalyst group 15 flows into cells as through channels and then flows into the partition wall through the inlet side partition wall 4a and then flows out from outlet side partition wall 4b. Then, on pores of inlet side partition wall 4a, catalyst group is formed (loaded), not only soot is burnt but "Ash" can be reliably trapped in pore diameter of the inlet side partition wall 4a as the PM trapping layer is formed. In addition, since the PM trapping layer is PM removing catalyst layer as well, soot that did not contact aforementioned catalyst group can reliably contact the PM trapping layer and combustion process can be carried out. Therefore, since "Ash" can be prevented from passing through from the entrance layer to the exit layer via gas outlet side of cell and the vicinity thereof, catalyst deterioration of the partition walls of gas outlet side of cell and the vicinity thereof can be prevented.

It is preferable that the relationship between the PM removing catalyst layer and the gas purification catalyst layer is as follows.

It is preferable that the PM removing catalyst layer is loaded (coated) with more oxidation catalyst than for the gas purification catalyst layer. Owing to the structure like this, catalyst consumption as a whole catalyst loaded filter is suppressed, PM removal is reliably performed in the PM removing catalyst layer, and further gas unburnt process can be reliably performed in the gas purification catalyst layer. That is, if the oxidation catalyst remains at the level that PM removing catalyst layer can not perform PM process satisfactorily, there is a risk that "Ash" may flow into the gas purification catalyst layer, which is not preferable because of easy occurrence of catalyst deterioration. If oxidation catalyst quantity loaded in the PM removing catalyst layer is too much, pores of PM trapping layer, which is the entrance layer, are closed and risk of pressure loss with soot becomes high, which is not preferable. Further, when catalyst quantity loaded in the PM removing catalyst layer and the gas purification catalyst layer is increased respectively, and the total quantity of catalyst loading of the whole catalyst loaded filter becomes too much, cracks and the like tend to be generated at the time of regeneration, and thereby the total catalyst quantity is preferably controlled.

What is more preferable is that oxidation catalyst loaded in the PM removing catalyst layer is 1.05 to 10 times more than the gas purification catalyst layer. If catalyst quantity loaded in the PM removing catalyst layer is less than 1.05 times of the gas purification catalyst layer, not only the soot combustion function is insufficient, but also sufficient regeneration efficiency cannot be obtained upon soot regeneration. In addition, if it is exceeding 10 times more than the gas purification catalyst layer, the gas purification catalyst quantity loaded in the exit layer becomes very small. Then, oxidation at the exit layer (gas purification catalyst layer) of CO generated by incomplete combustion at soot regeneration is not performed sufficiently, and CO emission tends to be lower to cause CO slip, therefore it is preferable to adjust in the range of aforementioned desired value. That is, it is preferable that oxidation catalyst is loaded in the range of desired value and owing to this, PM removing catalyst layer and gas purification catalyst layer work satisfactorily to enhance regeneration efficiency.

It is preferable that the total quantity of oxidation catalyst loaded or coated in the PM removing catalyst layer and the gas purification catalyst layer is 15 to 180 g/L. When it is below 15 g/L, there is such risk, as regeneration efficiency is decreased, that catalyst quantity in the exit layer becomes insufficient and that the purification efficiency of unburnt gas does not reach to 100%. When it is exceeding 180 g/L, catalyst closes pores of the PM trapping layer, and adverse effect of pressure loss with soot is likely to occur. When the pressure loss with soot becomes large, output of vehicle acceleration drops in actual driving, which is not preferable due to less utility.

It is preferable also that quantity of noble metal contained in the PM removing catalyst layer is less than that in the gas purification catalyst layer or that no noble metal is contained. Since addition of noble metal hardly contributes to soot regeneration, less consumption of noble metal can reduce cost, which is preferable.

It is preferable that quantity of ceria in the PM removing catalyst layer is added 1.2 to 10 times more than that in the gas purification catalyst. When ceria quantity ratio is below 1.2 times, it is not preferable due to deteriorated regeneration efficiency, and when exceeding 10 times, quantity of oxygen absorber catalyst in the exit layer becomes very small, resulting in oxygen shortage locally at CO oxidation. It is not preferable because gas emission of HC does not reach to sufficient level.

It is preferable that the PM removing catalyst layer is formed such that PM removing catalyst is coated on ceramic particles having an aspect ratio (horizontal to vertical ratio) of 2 or more. When forming on ceramic particles with an aspect ratio of 2 or more, it becomes easier to load or coat the PM removal catalyst. Consequently, thickness of the surface layer tends to be constant, or the trapped PM can be peeled off easily, which is preferable.

It is preferable that the average pore diameter of this PM trapping layer is formed to be small for trapping particulates. Though, it is preferable to form it in a suitable size to achieve the object of trapping particulates. That is, if the average pore diameter in the PM trapping layer of the partition wall is too small, PM becomes so to say a cover at the upper part of the PM trapping layer (inlet side entrance or near to the entrance of "Ash") when PM is trapped in the PM trapping layer, causing clogging easily, hence there is a risk of interruption of gas flow into the exit layer of the partition walls. Interruption of gas inflow prevents oxidation process of the gas purification catalyst loaded in the exit layer, which is not preferable due to deterioration of catalyst purification performance. To the contrary, if the average pore diameter in the PM trapping layer of the partition wall is too large, loading the PM removing catalyst becomes difficult, or even if the PM removing catalyst layer can be formed through loading the PM removing catalyst, contact of PM with the PM trapping layer (or PM removing catalyst) becomes insufficient. As a result, trapping is not sufficiently performed but so to say passing through to the gas purification catalyst layer of the exit layer is brought about, and there is a risk of insufficient gas purification. Accordingly, it is not preferable because of deterioration of catalyst purification performance.

In other words, it is preferable that oxidation catalyst as the PM removing catalyst is loaded (coated) in adequate quantity. Because loading (coating) of adequate quantity of the PM removing catalyst can trap PM sufficiently, and the gas purification catalyst layer functions sufficiently.

When oxidation catalyst is loaded on the pores of the PM removing catalyst layer so that it is smaller than the gas purification catalyst layer, even in a case, for example, where there is a defect (pore with the large pore diameter) in a part of the partition wall, concentrated inflow of exhaust gas into the defect can be suppressed and leakage situation of particulates to the outlet cell side of purified gas through the defect can be prevented.

When gas inlet side (entrance side) cells are large and gas outlet side (exit side) cells are small, permeability is secured and consequently, sufficient contact between the catalyst layer formed in gas inlet side and particulates contained in large number in the exhaust gas occurs easier, causing enhancement of PM purification performance. Enhancement of PM purification performance improves unburnt gas purification efficiency in the gas purification catalyst layer formed in outlet side of cell, at the same time deterioration of catalyst can be prevented, and thus synergetic effect can be exerted.

The average pore diameter of the PM trapping layer is preferably 1 to 15 $\mu$m. When the average pore diameter is below 1 $\mu$m, permeability becomes small, and thereby penetration resistance of pores tends to rise suddenly, which is not preferable. When the average diameter is exceeding 15 $\mu$m, which caused deterioration of trapping performance, and PM emission tends to exceed Euro 5 prescription of European regulation, which is not preferable. Accordingly, adjustment of the average pore diameter of the PM trapping layer to be within aforementioned desired range can make the present application effectual.

In addition, it is preferable that the PM trapping layer has an average particle diameter of 0.5 to 15 $\mu$m. When the average particle diameter is less than 0.5 $\mu$m, the particles enter pores in the partition walls to clog partition wall pore portions, and penetration resistance rises, which is not preferable. On the other hand, when the average particle diameter is more than 15 $\mu$m, a gap between particles becomes large to easily allow PM to penetrate, resulting in deterioration in PM emission, which is not preferable.

The average pore diameter of the PM trapping layer is obtained by measuring the partition wall where the PM trapping layer is formed by the mercury penetration method. When the pore distribution obtained has two mountain-shaped ranges, the pore diameter having the largest pore capacity in the distribution having a smaller pore diameter is determined as the average pore diameter of the PM trapping layer. On the other hand, when the pore distribution obtained has one mountain-shaped range, and a pore distribution of the PM trapping layer cannot be specified, a desired range of a cross section perpendicular to the axial direction of the partition walls is subjected to resin-filling polishing, an SEM (scanning electron microscope) observation is performed with a vision of 100 to 1000 magnifications, and the image obtained is subjected to a binarization treatment to measure the average pore diameter of the PM trapping layer.

In addition, when the average particle diameter of the particles forming the PM trapping layer is measured, a cross section obtained by resin-filling polishing of the desired region of a cross section perpendicular to the axial direction of the partition walls or a fracture face is subjected to an SEM (scanning electron microscope) observation with a vision of 100 to 1000 magnifications to measure the particle diameter of the particles forming the PM trapping layer. The average of the whole particle diameters measured in one vision is determined as the average particle diameter.

Porosity (measured at the state that no catalyst is loaded on the PM trapping layer) of the PM removing catalyst layer is preferably 40 to 90%, more preferably 50 to 80%. When the porosity of the PM removing catalyst layer is below 40%, there is a risk of problem occurrence that pressure loss becomes large, and when exceeding 90%, there is a risk of problem occurrence that PM removing catalyst layer peels off the surface of the partition wall due to insufficient strength of the PM removing catalyst layer, which is not preferable. Further, when the porosity of the PM removing catalyst layer is below the above range, as quantity of the deposited particulates is a lot, there is a problem that regeneration operation of filter becomes difficult. When exceeding the above range, strength of the honeycomb structural body constituting the catalyst loaded filter is lowered, causing difficulty of canning, which is not preferable.

Note that it is preferable when porosity of the PM removing catalyst layer is formed 5% or larger than that of porous ceramic composing the partition wall, there is such a merit that pressure loss (penetrating pressure loss) in the PM removing catalyst layer can be decreased, which is preferable.

Incidentally, the porosity of the PM removing catalyst layer (PM trapping layer) is measured in such a manner that a desired region of a cross section perpendicular to the axial direction of the partition walls is subjected to resin-filling polishing, an SEM (scanning electron microscope) observation is performed with a vision of 100 to 1000 magnifications, and the image obtained is subjected to a binarization treatment to measure the porosity from the ratio of the gap area in one vision to the particle area.

Porosity of the gas purification catalyst layer (partition walls) is preferably 30% to 70%, more preferably 35% to 60%. This because when it is below 30%, there is a risk of problem occurrence not only that pressure loss becomes large, but also that PM can not contact sufficiently oxidation catalyst in the PM removing catalyst layer formed at gas inlet opening of cell. To the contrary, when exceeding 70%, there is a risk of problem occurrence that the PM removing catalyst layer peels off the surface of the partition walls due to insufficient strength of the gas purification catalyst layer, which is not preferable.

[1-6] Honeycomb structural base:

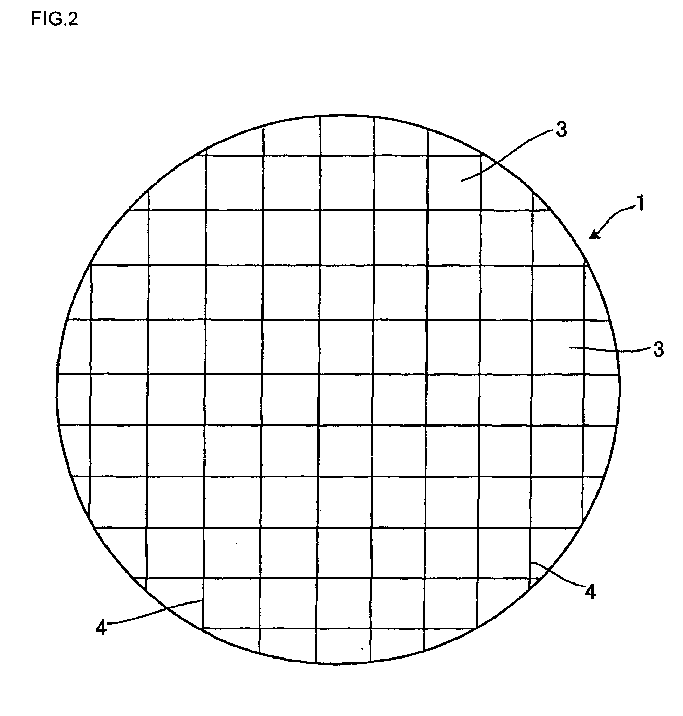

The honeycomb structural base according to the present embodiment, as shown in Figs. 1 to 3, is provided with a plurality of cells 3 which work as through channels of the exhaust gas, the cells 3 being separated by the partition walls 4 made of porous ceramic having a plenty of pores. Opening edge portions 11a on one side and opening edge portions 11b of the other side of a plurality of cells 3 are plugged alternately and thus plugged sections 13 are formed. However, the whole shape of honeycomb structure is not limited specifically, for example, cylindrical shape as shown in Figs. 1 and 2, and besides quadrangular prism shape, triangular pole shape, and the like can be cited.

As cell shape which is provided by honeycomb structural base (cell shape in a sectional plane perpendicular to the direction of cell forming), for example, rectangular cell as shown in Fig. 1, or shapes of hexagon cell, triangle cell, and the like can be cited. Though the shape is not limited to these shapes but cell shapes which are known to the public can be widely included. As cell shapes which are more preferable, circular cell, rectangular cell, or polygon cells which have more angular corners than that of rectangular, can be cited. The reason why such circular cell, rectangular cell, or polygon cells which have more angular corners than that of rectangular is preferable that catalyst sticking thickness at the corner portions in a sectional plane of cell is reduced so as to have constant thickness of catalyst layer. Taking cell density, ratio of open frontal area, and the like into consideration, the hexagon cell is preferable, above all.

Cell density of honeycomb structural base is not limited, but in a case where it is used as a catalyst loaded filter as the present embodiment, it is preferable that the cell density is in the range of 6 to 1,500 cells/inch$^2$ (0.9 to 233 cells/cm$^2$). Thickness of the partition wall is preferably in the range of 20 to 2,000 $\mu$m.

In a case where the honeycomb structural base is used as a catalyst loaded filter as the present embodiment, it is preferable that the opening end portion of one side and the opening end portion of the other side of a plurality of cells are arranged to be plugged alternately. For example, as shown in Fig. 3, a catalyst filter 1 which is provided with a plurality of cells 3 forming gas through channels partitioned by partition walls 4 made of porous ceramic having a plenty of pores, is preferably constituted so that one opening end portion and the other opening end portion of the plurality of cells are plugged alternately by plugged sections 13. In such a honeycomb structural body 1, when the exhaust gas G1 is led to flow in from the exhaust gas inlet cell 3 opened towards exhaust gas inlet side end surface A, particulates in the exhaust gas G1 are trapped in the partition walls 4 while the exhaust gas G1 passes through the partition walls 4. Then, the purified gas G2 from which particulates have been removed flows out from purified gas outlet cells 3 which are opened towards the exhaust gas outlet side end surface B.

Material of honeycomb structural base is not limited specifically, but ceramic can be used suitably and it is preferable that any one of cordierite, silicon carbide, aluminum, mullite, or silicon nitride is selected, from the view point of strength, heat resistance, corrosion resistance, and the like.

Above mentioned honeycomb structural base can be obtained in such a way that clay is generated through mingling and kneading aggregate particles and water, in addition depending on request, organic binder (hydroxypropoxyl-methylcellulose, methylcellulose, and the like), pore forming material (graphite, starch, synthetic resin, and the like), surfactant (ethylene glycol, fatty acid soap, and the like), and the like. Then, the clay is formed into a desired shape to obtain formed body, followed by firing process thereof.

As manufacturing method of the honeycomb structural base, the following method can be cited as an example. Although, not only such a manufacturing method of the honeycomb structural body but also any publicly known manufacturing method of the honeycomb structural body can be used.

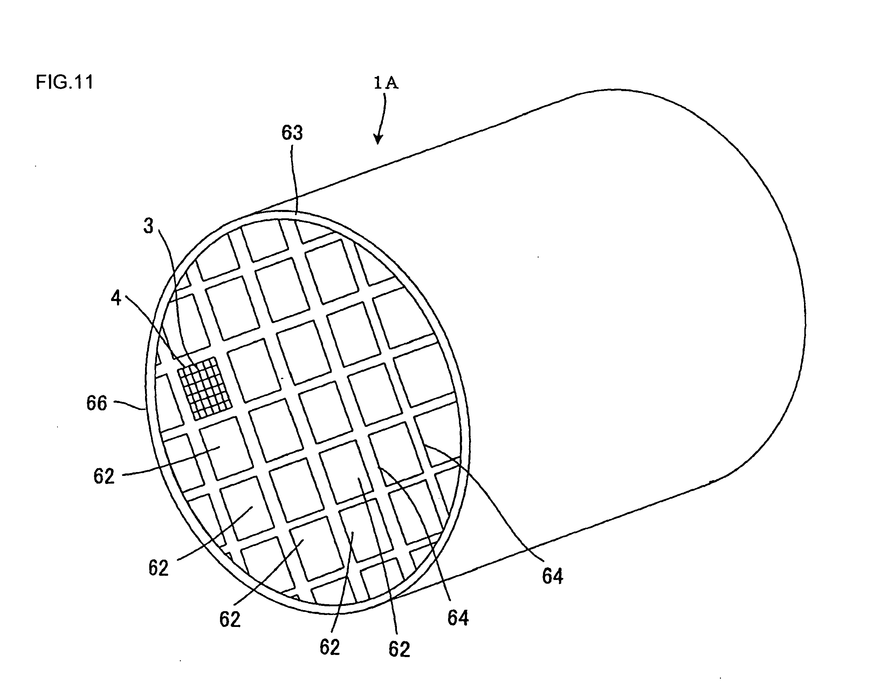

In a case where, for example a honeycomb segment joint body 63 composed of a plurality of honeycomb segments 62 as shown in Fig. 11, the segments being joined by binders 64, and the circumference thereof is formed to be a desired shape through machining operation, the following procedure is recommended.

Firstly, honeycomb segments are produced. As raw material of the honeycomb segment, for example, mingle powder of SiC and powder of metal Si with 80:20 mass ratio and knead them after adding methylcellulose, hydroxypropoxyl-methylcellulose, surfactant and water, and the plastic clay is obtained. Then, extrusion forming is performed using predetermined die to form honeycomb segment form with desired shape. Subsequently, the obtained honeycomb segment form is dried by microwave dryer, additionally dried by hot air dryer, and then fired (calcination) after being plugged.

This calcination is performed for removing of fat, and for example, operation in oxidation atmosphere at 550°C for 3 hours or so can be cited, but not limited to this, it is preferable to perform according to organic substance (organic binder, dispersion agent, pore forming material, and the like) in the honeycomb form. In general, since firing temperature of organic binder is approximately 100 to 300°C, and firing temperature of pore forming material is approximately 200 to 800°C, calcination temperature can be approximately 200 to 1,000°C. The calcination time is not limited specifically but usually about 3 to 100 hours.

In addition, calcination (firing) is performed. This "firing" means a process to sinter the forming raw material in the calcination body to have compactness securing predetermined strength. Calcination condition (temperature, time) varies depending on types of forming raw material, and thereby adequate condition can be selected according to the types of material. For example, calcination temperature in a case where calcination is performed in Ar inactive atmosphere is, in general, approximately 1, 400 to 1,500 °C, but not to limited to this.

Next, a PM trapping layer is formed. The PM trapping layer is formed in such a manner that slurry containing a silicon carbide powder is prepared and that the aforementioned honeycomb segment is immersed in the slurry, followed by firing (firing step for forming the PM trapping layer). It is preferred that it is immersed from the open end portion on the PM trapping layer formation cell side to the vicinity of the other open end portion in the aforementioned slurry stored in a storage tank. Incidentally, the silicon carbide powder contained in the slurry has an average particle diameter of 0.3 to 5 $\mu$m and dispersed in a dispersion medium containing an organic polymer material and the like. The viscosity of the slurry is preferably adjusted at about 50,000 c. p. , and the firing temperature is preferably about 1400 to 1500°C.

Next, catalyst group is formed on pores in the partition walls of the entrance layer. This catalyst group is formed in a way that slurry containing powder of silicon carbide is prepared, then aforementioned honeycomb segment is dipped in the slurry and the honeycomb segment is pulled out, after which air blow is carried out from the entrance side. This air blow can secure pores because the air passes through pores and catalyst group is remained on the ceramic particles except opening of pores. Subsequently, catalyst group is formed by means of drying, firing, and the like. It is preferable that average grain diameter of powder of silicon carbide which is arranged to be contained in slurry is 0.3 to 5 μm, which is dispersed in dispersion medium composed of organic polymer material and the like so that the viscosity thereof is adjusted to be about 50,000 cP, further firing temperature is preferably about 1,400 to 1,500 °C.

Note that, depending on the necessity, PM trapping layer of the entrance layer and the exit layer are formed to be in two layers so that respective layers are loaded or coated with the catalyst in the catalyst loading process which is described later.

After obtaining a plurality of honeycomb segments (sintered body) having desired dimension via above described process, bonding slurry which is kneaded with aluminosilicate fiber, colloidal silica, polyvinyl alcohol, and silicon carbide is applied and assembled each other through connection with pressure, subsequently dried with heat and thus, a honeycomb segment joint body having a total shape in quadrangular prism is obtained. Then, the honeycomb segment joint body is ground to be a cylindrical shape, subsequently the circumference thereof is covered with circumference coating layer made of the same material with the honeycomb segment form. Through drying and hardening, a cylindrical shaped honeycomb structural body having segmental structure can be obtained.

As for forming method of plugging portion, plugging slurry is stocked in stocking container. Then, the end portion on which the above mask is applied is dipped in the stock container to fill slurry for plug in the opening portion to which mask is not applied and thus plugged section is formed. For the other end portion, the same method of plug portion forming used for the above end portion, applying mask on cells which have been plugged in the above one end portion. Owing to this, the cells which are not plugged in one end portion are plugged in the other end portion, and therefore cells are plugged alternately checkerwise including even the other end portion. Plugs may be applied after honeycomb firing body is formed through firing of honeycomb form.

When the plugging member is made of the same material with honeycomb segment raw material, expansion coefficient of plug and that of honeycomb segment can be made to be same, which is preferable because enhancement of endurance performance can be achieved.

For example, in a case where the basic material of the partition wall is determined to be cordierite, the raw material of cordierite is added by dispersing medium such as water, and pore forming material, in addition organic binder and dispersion agent as well and they are kneaded to form clay which is in clayey state. The means to control clay through kneading the raw material of cordierite (raw material for forming) is not limited specifically, for example, methods using kneader, vacuum soil kneading machine, and the like can be cited. In a case where raw material of cordierite is fired, firing is preferably performed at 1,410°C to 1,440°C in about 3 to 10 hours.

As the firing method, such a method can be preferably used that controlled clay as mentioned above is formed by extrusion forming method and the like using a die having desired cell shape, partition wall thickness, and cell density.

[2-1] Manufacturing method of the present embodiment:

As the manufacturing method of one embodiment of catalyst loaded filter according to the present invention, it is preferable that catalyst group is formed on the entrance layer as a PM trapping layer, and catalyst is coated on the PM trapping layer. Because easy-to-form products with small manufacturing variation can be obtained.

Specifically, firstly prepare a honeycomb structural body (after bonding and machining), as described earlier, which has been formed with PM trapping layer at the entrance side of partition wall. Besides, slurry as catalyst group is adjusted in advance at the partition wall entrance layer of the honeycomb structural body. For example, if the catalyst group is the PM removing catalyst, slurry of oxidation catalyst is prepared in advance.

Subsequently, the honeycomb structural body (after bonding and machining) is dried for 2 hours at 120°C and fired for 1 hour at 550 °C. Further, the honeycomb structural body is dipped in slurry of the PM removing catalyst up to the predetermined height of the entrance end surface, and suction is performed from the exit end surface for predetermined time duration while adjusting suction pressure and suction flow rate at the predetermined level so that PM removing catalyst is loaded in the PM trapping layer. In addition, honeycomb segment is pulled out after dipped, and air blow is performed from the entrance side.

Then, similar to what described earlier, the honeycomb structural body is dried for 2 hours at 120°C and fired for 1 hour at 550°C. Thus, a catalyst loaded filter can be obtained.

The catalyst loading method is not limited specifically, but method which is known to the public can be used for loading. For example, dipping or suction method can be cited.

As for catalyst composition, for example, such catalysts can be cited that the composition ratio of the catalyst is, aluminum : platinum : ceria group material = 7 : 1 : 2 (mass ratio), herein for ceria group material, the composition ratio is, Ce : Zr : Pr : Y : Mn = 60 : 20 : 10 : 5 : 5 (mass ratio).

In a case where gas purification catalyst layer is formed in the side of the exhaust gas outlet (exit layer side) on the partition wall of the honeycomb structural body, the slurry of the gas purification catalyst is prepared in advance, subsequently the exit end surface (the one where PM trapping layer has not been applied) of the honeycomb structural body is dipped in the slurry of the gas purification catalyst from the cell up to the predetermined height, suction is performed from the entrance end surface (the one where PM trapping layer is applied) for only predetermined time duration while adjusting suction pressure and suction flow rate, so that the gas purification catalyst is loaded in the downstream layer. After that, drying for 2 hours at 120°C and firing for 1 hour at 550°C are performed, and thus the catalyst loaded filter can be obtained.

[EXAMPLES]

Hereinafter, the present invention will be described specifically using examples, and however the present invention should not be limited to these examples. It should be noted that word "part" and "%" mean part by mass and mass %, unless otherwise specified. Various evaluations and measurements were implemented in the following method.

[1] Contact area ratio of the most outer profile (three-dimensional contact ratio) :

Contact ratio of catalyst group on the surface in the desired area was checked. That is, after the desired area was embedded in resin and polished, a section thereof was observed by SEM (scanning electron microscope) and a quantitative analysis of chemical composition was performed by EDX (energy dispersive fluorescent X-ray analysis) so that measurement was carried out of deposited value of catalyst component at each measurement position as catalyst loaded quantity at the position. In SEM observation, projection was performed in the perpendicular direction to a plane representing average height of unevenness of the entrance layer in a visual field of 200 to 1,000 times and the projection plane and the edge thereof were measured. Specifically, polishing was repeated in each visual field observation to observe sections in the direction of depth, and pseudo three dimensional values was calculated, thus the distribution state was measured on the most outer profile.

[2] Contact line ratio of the most outer profile:

Contact ratio of catalyst group on the section in the desired area was checked. That is, after the desired area was embedded in resin and polished, a section thereof was observed by SEM (scanning electron microscope) and a quantitative analysis of chemical composition was performed by EDX (energy dispersive fluorescent X-ray analysis) so that measurement was carried out of deposited value of catalyst component at each measurement position as catalyst loaded quantity at the position. In SEM observation, projection was performed in the perpendicular direction to a plane representing average height of unevenness of the entrance layer in a visual field of 200 to 1, 000 times and the projection plane and the edge thereof were measured. Specifically, polishing was repeated in each visual field observation to observe sections in the direction of depth, and pseudo three dimensional values was calculated, thus the distribution state was measured on the most outer profile.

[3] Thickness of the catalyst group:

Thickness of catalyst group which was contacting the surface and the section in the desired area was checked. That is, after the desired area was embedded in resin and polished, a section thereof was observed by SEM (scanning electron microscope) and a quantitative analysis of chemical composition was performed by EDX (energy dispersive fluorescent X-ray analysis) so that measurement was carried out of deposited value of catalyst component at each measurement position as catalyst loaded quantity at the position. In SEM observation, projection was performed in the perpendicular direction to a plane representing average height of unevenness of the entrance layer in a visual field of 200 to 1,000 times and the projection plane and the edge thereof was measured. Specifically, polishing was repeated in each visual field observation to observe sections in the direction of depth, and pseudo three dimensional values was calculated, thus the distribution state was measured on the most outer profile.

It should be noted that thickness of catalyst group, as described earlier, is a distance (dimension) measured from the "most outer profile" in the direction perpendicular to the line representing average height on unevenness of the entrance layer, or in the perpendicular direction to the honeycomb filter axis. After embedding in resin and polishing an area on a surface or in a section which was located in desired area, the section thereof was observed by SEM (scanning electron microscope), quantitative analysis of chemical composition was performed by EDX (energy-dispersive fluorescent X-ray analysis), and the deposited value of catalyst component was measured at each measurement point as the catalyst loaded value of the position, and thus the thickness was obtained. Specifically, as shown in Fig. 13, for example, in a case where SiC particles forming PM trapping layer are in contact with catalyst group, taking as a reference line S1 the tangential line of the spot where catalyst group contacts SiC particles, a reference vertical line U1, which is perpendicular to the reference line S1, was measured as a thickness of catalyst group, in which the distance between the reference line S1 and a reference parallel line T1 which is parallel to the S1 and is tangent to the catalyst group is maximum.

[4] Pressure loss:

Catalyst coated DPF was equipped in a 2.0L diesel engine, and the pressure loss was measured when soot was deposited 4 g/L at a steady state of 2,000 rpm × 60 Nm.

[5-1] Regeneration efficiency test:

Catalyst coated DPF was equipped in a 2.0L diesel engine, and the entrance gas temperature of the DPF was controlled at 600°C by means of post injection at a steady state of 2,000 rpm × 60 Nm. Regeneration test was conducted with deposited soot of 4 g/L. The post injection was maintained for 10 minutes and the difference of DPF mass was measured before and after the test. The regeneration efficiency was measured from the deposited soot amount (A) before the regeneration test and the remaining soot amount (B) after the regeneration test. Specifically, the regeneration efficiency was calculated from A-B/A×100 (%).

[5-2] Regeneration efficiency test after duration:

A catalyst coated DPF was equipped in a 2.0L diesel engine, and the NEDC mode, which is an European emission regulation driving mode, was repeated until it corresponds with 160,000km driving. Then, the regeneration efficiency after duration was measured by measuring the regeneration efficiency under the same measurement conditions as in the "Regeneration efficiency test" of [5-1].

[6-1] DPF:

For both examples and comparative examples, catalyst loaded filter was manufactured using the honeycomb structural body which is shown below.

As raw material of the honeycomb structural body which is base material of catalyst loaded filter, mingled powder of SiC powder and powder of metal Si with 80:20 mass ratio was used, to which methylcellulose, hydroxypropoxyl-methylcellulose, surfactant and water were added, and the plastic clay was manufactured, then obtained clay was processed by extrusion forming using extrusion forming machine to obtain honeycomb segment form with desired dimensions, 4 pieces × 4 pieces = 16 pieces in total. Subsequently, after the obtained honeycomb segment forms were dried by microwave and hot air, the both end surfaces of the cells were plugged so that checks pattern was presented to be fired tentatively for 3 hours at 550°C for grease removing. Further firing for 2 hours at the firing temperature of 1,700°C in Ar inactive atmosphere was performed so that SiC crystal particles were bound by Si to obtain a plurality of honeycomb segments (sintered body).

Subsequently, circumference surfaces of the honeycomb segments (sintered body) were applied with bonding slurry to be assembled each other through connection with pressure, subsequently dried with heat and thus, and a honeycomb segment joint body having a total shape in quadrangular prism was obtained. Then, the honeycomb segment joint body was ground to be a cylindrical shape, subsequently the circumference thereof was covered with circumference coating layer made of the same material with the honeycomb segment form. After drying and hardening, a honeycomb structural body was obtained having $\phi$ 144 × 152 mm L, 12 mil/300 cpsi, 40% porosity, 15 $\mu$m average pore diameter.

Further, predetermined quantity of ceramic slurry was injected into the cell at the inlet side of the honeycomb structural body, then after suctioning it from the exit side, the honeycomb structural body was dried and sintered at 700 °C and thus the PM trapping layer was formed at the inlet side of cell. Forming was carried out so that the thickness of the PM trapping layer was set to be 50 $\mu$m, and the total thickness was 355 $\mu$m (partition wall: 12 mil [= 305 $\mu$m], and PM trapping layer thickness: 50 $\mu$m).

After that, drying for 2 hours at 120°C and then catalyst firing for 1 hour at 550°C were performed and thus silicon carbide sintered body (SiC-DPF) with honeycomb structure was manufactured.

PM removing catalyst is coated by dipping from the entrance side of SiC-DPF which was obtained as described so far. Next, the catalyst group on the most outer profile of the entrance layer was dispersed while the quantity thereof was in control by means of air blow pressure adjustment after dipping, so that the gas purification catalyst was loaded at the exit side. Specifically, the gas purification catalyst was coated on the partition walls by dipping from the exit side of the catalyst loaded filter obtained through the processes described above, and thus the catalyst loaded filter was obtained. Note that the total catalyst quantity which has been coated in this case was 50 g/L.

[7] Catalyst:

As for catalyst, oxidation catalyst was used. A purification catalyst filter was obtained in the following procedure. For the partition walls partitioning and forming multiple cells which aforementioned Sic-DPF provided, catalyst liquid containing oxidation catalyst component was coated by dipping according to the desired place and coating quantity of the examples and comparative examples which will be described later. The catalyst group on the most outer profile of the entrance layer was dispersed and loaded while the quantity thereof was controlled by the adjustment of air blow pressure, and heat treatment was performed to bake for loading.

For PM removing catalyst, catalyst having combination ratio of Ce: Zr: Pr: Y: Mn = 60:20:10:5:5 (mass ratio) was used as ceria group material, and for gas purification catalyst, catalyst having combination ratio of alumina: platinum: ceria group material = 7:1:2 (mass ratio) was used.

As for catalyst loading method of the catalyst loaded filter, in a case of a catalyst loaded filter, catalyst coating was carried out for each layer by means of suctioning catalyst slurry from the entrance end surface side for the catalyst to the PM trapping layer, followed by loading catalyst group by adjusting air blow pressure. After that, firstly drying for 2 hours at 120°C was carried out, and then catalyst firing for 1 hour at 550°C was carried out. In a case of the catalyst loaded filter 1, after operation of aforementioned catalyst loading process, catalyst coating was carried out by means of suctioning catalyst slurry from the exit end surface side for the catalyst to the gas purification layer, and similarly with what described above, drying for 2 hours at 120°C was carried out, and then catalyst firing for 1 hour at 550°C was carried out.

(Example 1 to example 23)

As shown in Table 1, in aforementioned SiC-DPF, catalyst loaded filter of the example 1 was obtained, with setting of "PM trapping layer average particle diameter" to be 5 μm, "the most outer profile contact area ratio (three-dimensional contact ratio)" to be 18%, "the most outer profile contact line ratio" to be 19%, "thickness" of catalyst group to be 10 μm, and "the most outer profile contact length" to be 24 μm. Similar to this, catalyst loaded filter of the example 2 was obtained, with setting of "the PM trapping layer average particle diameter" to be 5 μm, "the most outer profile contact area ratio (three-dimensional contact ratio)" to be 20%, "the most outer profile contact line ratio" to be 21%, "thickness" of catalyst group to be 10 μm, and "the most outer profile contact length" to be 28 μm; catalyst loaded filter of the example 3 was obtained, with setting of "the PM trapping layer average particle diameter" to be 5 μm, "the most outer profile contact area ratio (three-dimensional contact ratio)" to be 50%, "the most outer profile contact line ratio" to be 49%, "thickness" of catalyst group to be 10 μm, and "the most outer profile contact length" to be 56 μm; catalyst loaded filter of the example 4 was obtained, with setting of "the PM trapping layer average particle diameter" to be 5 μm, "the most outer profile contact area ratio (three-dimensional contact ratio)" to be 80%, "the most outer profile contact line ratio" to be 80%, "thickness" of catalyst group to be 10 μm, and "the most outer profile contact length" to be 92 μm, respectively. In the same manner, a catalyst loaded filter of the example 5 was obtained, with setting of "the PM trapping layer average particle diameter" to be 5 μm, "the most outer profile contact area ratio (three-dimensional contact ratio)" to be 20%, "the most outer profile contact line ratio" to be 18%, "thickness" of catalyst group to be 10μ m, and "the most outer profile contact length" to be 32 μm.

In the same manner, a catalyst loaded filter of the example 6 was obtained, with setting of "the PM trapping layer average particle diameter" to be 5 μm, "the most outer profile contact area ratio (three-dimensional contact ratio)" to be 80%, "the most outer profile contact line ratio" to be 82%, "thickness" of catalyst group to be 10 μm, and "the most outer profile contact length" to be 91 μm; a catalyst loaded filter of the example 7 was obtained, with setting of "the PM trapping layer average particle diameter" to be 5 μm, "the most outer profile contact area ratio (three-dimensional contact ratio)" to be 17%, "the most outer profile contact line ratio" to be 20%, "thickness" of catalyst group to be 10 μm, and "the most outer profile contact length" to be 26 μm; a catalyst loaded filter of the example 8 was obtained, with setting of "the PM trapping layer average particle diameter" to be 5 μm, "the most outer profile contact area ratio (three-dimensional contact ratio)" to be 82%, "the most outer profile contact line ratio" to be 80%, "thickness" of catalyst group to be 10 μm, and "the most outer profile contact length" to be 94 μm; a catalyst loaded filter of the example 9 was obtained, with setting of "the PM trapping layer average particle diameter" to be 5 μm, "the most outer profile contact area ratio (three-dimensional contact ratio)" to be 85%, "the most outer profile contact line ratio" to be 84%, "thickness" of catalyst group to be 10 μm, and "the most outer profile contact length" to be 94 μm; and a catalyst loaded filter of the example 10 was obtained, with setting of "the PM trapping layer average particle diameter" to be 5 μm, "the most outer profile contact area ratio (three-dimensional contact ratio)" to be 50%, "the most outer profile contact line ratio" to be 50%, "thickness" of catalyst group to be 20 μm, and "the most outer profile contact length" to be 58 μm.

In the same manner, a catalyst loaded filter of the example 11 was obtained, with setting of "the PM trapping layer average particle diameter" to be 5 μm, "the most outer profile contact area ratio (three-dimensional contact ratio)" to be 50%, "the most outer profile contact line ratio" to be 50%, "thickness" of catalyst group to be 30 μm, and "the most

outer profile contact length" to be 56 $\mu$m; a catalyst loaded filter of the example 12 was obtained, with setting of "the PM trapping layer average particle diameter" to be 5 $\mu$m, "the most outer profile contact area ratio (three-dimensional contact ratio)" to be 50%, "the most outer profile contact line ratio" to be 50%, "thickness" of catalyst group to be 32 $\mu$m, and "the most outer profile contact length" to be 58 $\mu$m; a catalyst loaded filter of the example 13 was obtained, with setting of "the PM trapping layer average particle diameter" to be 5 $\mu$m, "the most outer profile contact area ratio (three-dimensional contact ratio)" to be 50%, "the most outer profile contact line ratio" to be 50%, "thickness" of catalyst group to be 35 $\mu$m, and "the most outer profile contact length" to be 61 $\mu$m; and a catalyst loaded filter of the example 15 was obtained, with setting of "the PM trapping layer average particle diameter" to be 5 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 4 $\mu$m. In a manner similar to that of the example 4, a catalyst loaded filter of the example 14 was obtained by coating a DPF with setting of "the most outer profile contact area ratio " to be 80%, "the most outer profile contact line ratio" to be 80%, "thickness" of catalyst group to be 10 $\mu$m with an oxidation catalyst having both the PM removal function and the gas purification function.

In the same manner, a catalyst loaded filter of the example 16 was obtained, with setting of "the PM trapping layer average particle diameter" to be 5 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 5 $\mu$m; a catalyst loaded filter of the example 17 was obtained, with setting of "the PM trapping layer average particle diameter" to be 5 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 100 $\mu$m; a catalyst loaded filter of the example 18 was obtained, with setting of "the PM trapping layer average particle diameter" to be 5 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 110 $\mu$m; a catalyst loaded filter of the example 19 was obtained, with setting of "the PM trapping layer average particle diameter" to be 10 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 8 $\mu$m; and a catalyst loaded filter of the example 20 was obtained, with setting of "the PM trapping layer average particle diameter" to be 10 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 10 $\mu$m.

In the same manner, a catalyst loaded filter of the example 21 was obtained, with setting of "the PM trapping layer average particle diameter" to be 10 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 50 $\mu$m; a catalyst loaded filter of the example 22 was obtained, with setting of "the PM trapping layer average particle diameter" to be 10 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 200 $\mu$m; and a catalyst loaded filter of the example 23 was obtained, with setting of "the PM trapping layer average particle diameter" to be 10 $\mu$m, "the most outer profile contact area ratio (three-dimensional contact ratio)" to be 50%, "the most outer profile contact line ratio" to be 50%, "thickness" of catalyst group to be 10 $\mu$m, and "the most outer profile contact length" to be 220 $\mu$m.

(Comparative example 1 )

In aforementioned SiC-DPF, catalyst loaded filter of the comparative example 1 was obtained, with setting of "the PM trapping layer average particle diameter" to be 5 $\mu$m, "the most outer profile contact area ratio (three-dimensional contact ratio)" to be 0%, "the most outer profile contact line ratio" to be 0%, "thickness" of catalyst group to be 0 $\mu$m, and "the most outer profile contact length" to be 0 $\mu$m.

Aforementioned experiments were conducted using the catalyst loaded filter of the examples 1 to 23, and the comparative example 1, which were obtained as described above. The results obtained from the experiments are shown in the table 1 below.

[Table 1]

| | PM trapping layer average particle diameter | Most outer profile contact area ratio (three-dimensional contact ratio) | Most outer profile contact line ratio | Thickness of catalyst group | Most outer profile contact length | Most outer profile contact length/PM trapping layer average particle diameter | Regeneration efficiency | Regeneration efficiency after duration | Pressure loss |
|---|---|---|---|---|---|---|---|---|---|
| | [μm] | [%] | [%] | [μm] | [μm] | [-] | [%] | [%] | [kPa] |
| Comparative example 1 | 5 | 0 | 0 | 0 | 0 | 0 | 76 | 53 | 4.1 |
| Example 1 | 5 | 18 | 19 | 10 | 24 | 4.8 | 94 | 75 | 4.0 |
| Example 2 | 5 | 20 | 21 | 10 | 28 | 5.6 | 100 | 87 | 4.3 |
| Example 3 | 5 | 50 | 49 | 10 | 56 | 11.2 | 100 | 89 | 4.4 |
| Example 4 | 5 | 80 | 80 | 10 | 92 | 18.4 | 100 | 89 | 4.6 |
| Example 5 | 5 | 20 | 18 | 10 | 32 | 6.4 | 100 | 84 | 4.1 |
| Example 6 | 5 | 80 | 82 | 10 | 91 | 18.2 | 100 | 80 | 6.0 |
| Example 7 | 5 | 17 | 20 | 10 | 26 | 5.2 | 100 | 79 | 4.1 |
| Example 8 | 5 | 82 | 80 | 10 | 94 | 18.8 | 100 | 84 | 6.1 |
| Example 9 | 5 | 85 | 84 | 10 | 94 | 18.8 | 100 | 83 | 7.3 |
| Example 10 | 5 | 50 | 50 | 20 | 58 | 11.6 | 100 | 90 | 4.2 |
| Example 11 | 5 | 50 | 50 | 30 | 56 | 11.2 | 100 | 92 | 4.3 |
| Example 12 | 5 | 50 | 50 | 32 | 58 | 11.6 | 100 | 92 | 6.3 |
| Example 13 | 5 | 50 | 50 | 35 | 61 | 12.2 | 100 | 93 | 6.4 |
| Example 14 | 5 | 80 | 80 | 10 | 91 | 18.2 | 100 | 79 | 5.2 |
| Example 15 | 5 | 50 | 50 | 10 | 4 | 0.8 | 96 | 76 | 4.1 |
| Example 16 | 5 | 50 | 50 | 10 | 5 | 1 | 100 | 86 | 4.1 |

EP 2 168 662 A1

| | PM trapping layer average particle diameter | Most outer profile contact area ratio (three-dimensional contact ratio) | Most outer profile contact line ratio | Thickness of catalyst group | Most outer profile contact length | Most outer profile contact length/PM trapping layer average particle diameter | Regeneration efficiency | Regeneration efficiency after duration | Pressure loss |
|---|---|---|---|---|---|---|---|---|---|
| | [μm] | [%] | [%] | [μm] | [μm] | [-] | [%] | [%] | [kPa] |
| Example 17 | 5 | 50 | 50 | 10 | 100 | 20 | 100 | 90 | 4.3 |
| Example 18 | 5 | 50 | 50 | 10 | 110 | 22 | 100 | 91 | 6.8 |
| Example 19 | 10 | 50 | 50 | 10 | 8 | 0.8 | 95 | 87 | 4.7 |
| Example 20 | 10 | 50 | 50 | 10 | 10 | 1 | 100 | 86 | 4.7 |
| Example 21 | 10 | 50 | 50 | 10 | 50 | 5 | 100 | 89 | 4.9 |
| Example 22 | 10 | 50 | 50 | 10 | 200 | 20 | 100 | 91 | 5.0 |
| Example 23 | 10 | 50 | 50 | 10 | 220 | 22 | 100 | 92 | 6.8 |

(Discussion of test result 1)

As shown in Table 1, in examples 1 to 23, good results could be obtained. In particular, in examples 2 to 4, 7, 10, 11, 16, 17, and 20 to 22, regeneration efficiency reached to 100% while reducing pressure loss, and regeneration efficiency after duration was not reduced. Thus, it was proven that remarkable results were obtained. Also, in the other examples, good results could be obtained in comparison with the comparative example 1 described below.

Here, in example 1, regeneration efficiency of 100% could not be obtained, and regeneration efficiency after duration was 75%. This seems to be because the contact of soot with the catalyst was insufficient since both the most outer profile contact area ratio (three-dimensional contact ratio) and the most outer profile contact line ratio were less than 20%. Incidentally, when the regeneration efficiency of 100% cannot be obtained under the same test conditions, the amount of deposited soot gradually increases in the process of repeated regeneration, and, when the deposition amount exceeds a certain level, soot causes extraordinary combustion, and a crack may be caused in the DPF. In addition, when the post-injection keeping time is extended, the fuel injection has to be increased, which may have an evil of increasing fuel consumption.

In addition, in Examples 5, 6, 8, 9, 15, and 19, it was confirmed that regeneration efficiency after duration slightly fell off in comparison with examples 2 to 4. In Example 5, since the most outer profile contact line ratio was less than 20%, which was not sufficient, soot combustion efficiency was not sufficient due to deterioration of the catalyst group after duration to make the regeneration efficiency below 85% as a result. In addition, in Example 6, the regeneration efficiency after duration was 80%, which fell off sharply, since the most outer profile contact line ratio was above 80%, most part of the catalyst group was covered due to Ash deposition after duration to make contact with soot insufficient. In addition, in example 8, the regeneration efficiency after duration was below 85% because, like example 6, most part of the catalyst group was covered due to Ash deposition after duration to make contact with soot insufficient since the most outer profile contact line ratio was above 80%, most part of the catalyst group was covered due to Ash deposition after duration to make contact with soot insufficient. In Example 9, it seems that, since both the most outer profile contact area ratio (three-dimensional contact ratio) and the most outer profile contact line ratio were above 80%, regeneration efficiency was insufficient due to Ash deposition after duration like examples 6 and 8, and surface open pores in the gas purification catalyst layer were clogged to cause sharp pressure loss. In examples 15 and 19, since the most outer profile contact length was insufficient, effect of the catalyst group was decreased due to thermal deterioration after duration, and soot combustion function was deteriorated to sharply decrease the regeneration efficiency. However, in any of the examples, regeneration efficiency and regeneration efficiency after duration were improved in comparison with comparative example 1, and it can be said that they are good DPFs.

Like example 9, in examples 12, 13, 18, and 23, pressure loss was 6 kPa or more. Therefore, since the fuel injection amount for the same output had to be increased, decrease in fuel economy of about 5% was caused. Regarding this point, in Examples 12 and 13, it seems that it was caused because surface open pores of the gas purification catalyst layer were clogged because the thickness of catalyst group exceeded 30 $\mu$m. In examples 18 and 23, it seems that it was caused because surface open pores of the gas purification catalyst layer were clogged because the value obtained by dividing "the most outer profile contact length" by "the PM trapping layer average particle diameter" was above 20.

Thus, in Examples 1, 5, 6, 8, 9, 12 13, 15, 18, 19, and 23, decrease in regeneration efficiency or/and regeneration efficiency after duration, rise in pressure loss, or the like were found in comparison with the other examples. Nevertheless, it was confirmed that they were excellent DPFs from the fact that regeneration efficiency and regeneration efficiency after duration were remarkably improved in comparison with comparative example 1 described later. In addition, in example 14, since the soot combustion function in PM removing catalyst layer was insufficient, the regeneration efficiency after duration was inferior to the DPF where the PM removing catalyst was coated though the initial regeneration efficiency was sufficient.

(Discussion of test result 2)

On the other hand, in comparative example 1, 100% regeneration efficiency was not obtained. The reason of this result is considered because if there is no catalyst group on the surface layer in the comparative example 1, soot hardly contacts the catalyst which is deposited in the layer.

From the experiment results described above, in the comparative examples, when regeneration is repeated, pressure loss tends to happen, and it was proved that intervals of regeneration became shorter quickly with each occasion of regeneration repetition. That is, since it is required to perform regeneration in high frequency in practical use, fuel consumption is deteriorated remarkably. Therefore it is deemed that this example can not be put to practical use.

[INDUSTRIAL APPLICABILITY]

The catalyst loaded filter according to the present invention can be preferably used to trap or purify particulates contained in the exhaust gas emitted from internal combustion engines such as diesel engine, heavy vehicle engines for trucks, buses, and the like, and various types of combustion apparatus.

**Claims**

1. A catalyst loaded filter, comprising a honeycomb structure base where a plurality of cells forming exhaust gas through channels partitioned by partition walls made of porous ceramic having multiple pores are formed, wherein plugged sections, which are plugged, are formed alternately at opening end portions of one side and opening end portions of the other side of said plurality of cells,
   PM trapping layers having an average pore diameter smaller than an average pore diameter in the partition walls are formed on said partition walls, said PM trapping layers having catalyst layers which are loaded with catalyst, and further
   catalyst group is distributed on most outer profile of said PM trapping layer.

2. The catalyst loaded filter according to claim 1, wherein
   three-dimensional contact ratio of said catalyst group which is distributed on said most outer profile is 20% or more, and 80% or less.

3. The catalyst loaded filter according to claim 1 or 2, wherein
   a ratio of contact length of said catalyst group to the most outer profile line formed in lengthwise direction of predetermined area on said most outer profile is 20% or more, and 80% or less.

4. The catalyst loaded filter according to any one of claims 1 to 3, wherein
   thickness of said catalyst group is 30 $\mu$m or less from said most outer profile line.

5. The catalyst loaded filter according to any one of claims 1 to 4, wherein
   a length of said catalyst group in contact with said most outer profile line is 1 times or more and 20 times or less of average pore diameter of particles forming said PM trapping layer.

6. The catalyst loaded filter according to any one of claims 1 to 5, wherein
   a catalyst of said catalyst group and said catalyst layer are a PM removing catalyst.

7. The catalyst loaded filter according to claim 6, wherein
   said PM removing catalyst is composed of particles of the PM removing catalyst.

8. The catalyst loaded filter according to any one of claims 1 to 7, wherein
   an exit layer of said partition wall from which exhaust gas flows out is structured as a gas purification catalyst layer being loaded or coated with a gas purification catalyst to promote oxidation of unburnt gas.

FIG.1

FIG.2

FIG.3

FIG.4

FIG.5

FIG.6

FIG.7

FIG.8

FIG.9

( SMALL PORE DIAMETER )   ( SMALL PORE DIAMETER )

4a   22   4a

15   22   15

G1

G1

20

4

24   4b   24   24

( LARGE PORE DIAMETER )   ( LARGE PORE DIAMETER )

EP 2 168 662 A1

FIG.10

G1

15

7(20(22))

4

FIG.11

EP 2 168 662 A1

FIG.12

CUTTING OUT

FIG.13

THICKNESS OF
CATALYST GROUP

T1

U1

SiC PARTICLE

CATALYST
GROUP

S1

FIG.14

EP 2 168 662 A1

FIG.15

( SMALL PORE DIAMETER )

( SMALL PORE DIAMETER )

111

109

111

109

117

105

113

115

113

115

( LARGE PORE DIAMETER )

( LARGE PORE DIAMETER )

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 59 211708 A (NISSAN MOTOR) 30 November 1984 (1984-11-30) * abstract * ----- | 1,6-7 | INV. B01D53/94 B01J23/10 B01J23/34 |
| E | EP 2 105 200 A1 (NGK INSULATORS LTD [JP]) 30 September 2009 (2009-09-30) * abstract * * paragraphs [0142] - [0146] * * table 1 * * figure 6 * * claims * ----- | 1-8 | B01J23/63 B01J35/00 B01J35/04 F01N3/022 F01N3/28 B01D46/24 B01D46/00 |
| E | EP 2 105 199 A1 (NGK INSULATORS LTD [JP]) 30 September 2009 (2009-09-30) * abstract * * paragraphs [0132] - [0136] * * table 1 * * figure 6 * * claims * ----- | 1-8 | |
| X,P | WO 2008/136232 A1 (NGK INSULATORS LTD [JP]; MIZUNO YUKIO [JP]; NODA NAOMI [JP]; YAMADA TO) 13 November 2008 (2008-11-13) * abstract * * the whole document * * More particularly: * * paragraphs [0051] - [0055], [0068] - [0072]; figure 3 * * claims * ----- | 1-7 | TECHNICAL FIELDS SEARCHED (IPC) B01D B01J F01N |

The present search report has been drawn up for all claims

| Place of search | Date of completion of the search | Examiner |
|---|---|---|
| Munich | 22 February 2010 | Gosselin, Daniel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................

& : member of the same patent family, corresponding
document

EPO FORM 1503 03.82 (P04C01)

## EP 2 168 662 A1

**ANNEX TO THE EUROPEAN SEARCH REPORT
ON EUROPEAN PATENT APPLICATION NO.**

EP 09 25 2119

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2010

| Patent document cited in search report | | Publication date | Patent family member(s) | | Publication date |
|---|---|---|---|---|---|
| JP 59211708 | A | 30-11-1984 | NONE | | |
| EP 2105200 | A1 | 30-09-2009 | JP US | 2009226376 A 2009247396 A1 | 08-10-2009 01-10-2009 |
| EP 2105199 | A1 | 30-09-2009 | JP | 2009226375 A | 08-10-2009 |
| WO 2008136232 | A1 | 13-11-2008 | NONE | | |

EPO FORM P0459

For more details about this annex : see Official Journal of the European Patent Office, No. 12/82

**EP 2 168 662 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 07505083W B
- JP 2007209913 A
- JP 2006077672 A